(19) Europäisches Patentamt
European Patent Office
Office européen des brevets

(11) EP 2 032 643 B1

(12) **EUROPEAN PATENT SPECIFICATION**

(45) Date of publication and mention of the grant of the patent:
**30.05.2012 Bulletin 2012/22**

(21) Application number: **07812293.4**

(22) Date of filing: **25.06.2007**

(51) Int Cl.:
***C08K 9/04*** *(2006.01)* ***C08K 3/34*** *(2006.01)*
***C08K 5/50*** *(2006.01)*

(86) International application number:
**PCT/US2007/072013**

(87) International publication number:
**WO 2008/002866 (03.01.2008 Gazette 2008/01)**

(54) **COMPOSITIONS AND METHODS FOR POLYMER COMPOSITES**

ZUSAMMENSETZUNGEN UND VERFAHREN FÜR POLYMERVERBINDUNGEN

COMPOSITIONS ET PROCÉDÉS POUR COMPOSITES POLYMÈRES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **26.06.2006 US 805821 P**
**20.06.2007 US 945150 P**
**21.06.2007 US 766355**

(43) Date of publication of application:
**11.03.2009 Bulletin 2009/11**

(73) Proprietor: **SABIC Innovative Plastics IP B.V.**
**4612 PX Bergen op Zoom (NL)**

(72) Inventors:
- **CHAN, Kwok, Pong**
  **Troy, NY 12180 (US)**
- **ODLE, Roy, Ray**
  **Mt. Verson, IN 47620 (US)**
- **MULLEN, Tara, J.**
  **Plymouth, MN 55447 (US)**
- **WHITE, James, Mitchell**
  **Niskayuna, NY 12309 (US)**
- **HAGBERG, Erik**
  **Decatur, IL 62522 (US)**

(74) Representative: **Office Freylinger**
**P.O. Box 48**
**8001 Strassen (LU)**

(56) References cited:
**WO-A-00/78540**

- **PARK ET AL: "Polyimide/silica hybrid-clay nanocomposites" POLYMER, ELSEVIER SCIENCE PUBLISHERS B.V, GB, vol. 46, no. 23, 14 November 2005 (2005-11-14), pages 9694-9701, XP005115544 ISSN: 0032-3861**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 032 643 B1

## Description

### BACKGROUND

This invention relates to organic salt compositions useful in the preparation of organoclay compositions, polymer-organoclay composite compositions, and methods for the preparation of polymer nanocomposites.

Organoclays serve as useful additives in the preparation of polymer compositions possessing enhanced physical properties relative to unfilled polymeric materials, and relative to polymer composite compositions comprising inorganic clays. Organoclays are typically prepared by replacing the inorganic cations present in the galleries between the silicate layers of a typical inorganic clay with organic cations. A principal advantage of the organoclay compositions is that when they are combined within a polymer composition the organoclay is found to exfoliate and interact with the polymer matrix to a greater degree than in the case of a corresponding composition comprising a purely inorganic clay. The presence of organic moieties between the inorganic silicate layers present in the organoclay both swells the organoclay, i.e. increases the d-spacing in the organoclay relative to the d-spacing in the corresponding inorganic clay, and enhances the tendency of the organoclay to exfoliate when subjected to shearing forces within a polymer matrix. In some instances exfoliation occurs so completely that a polymeric composition comprising very highly dispersed silicate layers results, and the organoclay-containing polymer composition is referred to as a nanocomposite.

Despite impressive advances in this field over the past decade, improved organoclay compositions are actively sought after and are highly prized when discovered. One deficiency in many organoclays is the thermal instability of the organic cation(s) present, making them unsuitable in applications wherein the polymer-organoclay composition must be processed at high temperature, as is the case in organoclay-containing polymer compositions comprising "high heat" polymers such as polyetherimide. Another deficiency of many known organoclay compositions is that the organoclay compositions may interact unfavorably with the polymer matrix when the organoclay composition is dispersed in a polymer matrix and marginal performance of the organoclay-containing polymer composition may result. For example, when the organic cation is a primary ammonium cation and the polymer matrix is sensitive to amine groups, degradation of the polymer matrix may result during melt mixing, for example, of the polymer matrix with the organoclay composition.

Thus, there is keen interest in the development of organoclay compositions which are both thermally stable and which interact favorably with the polymer matrix in organoclay-containing polymer compositions. The instant invention addresses these and other technical challenges.

### BRIEF DESCRIPTION

In various embodiments, the present invention provides novel quaternary organophosphonium salts which are useful in the preparation of organoclay compositions. Thus, disclosed herein or novel organoclay compositions prepared using the novel organic salts and novel polymer-organoclay composite compositions comprising the organoclay compositions. Also disclosed is a provides novel methodology for the preparation of polymer-organoclay composite compositions. These and other aspects of the invention are disclosed in detail herein.

### BRIEF DESCRIPTION OF THE FIGURE

Figure 1 shows a resulting film of this invention having a nanosilicate loading of 7%, a machine direction CTE of 33.0 ppm/˚C, and a Tg of 255˚C.

### DETAILED DESCRIPTION

In the following specification and the claims, which follow, reference will be made to a number of terms, which shall be defined to have the following meanings.

The singular forms "a", "an" and "the" include plural referents unless the context clearly dictates otherwise.

"Optional" or "optionally" means that the subsequently described event or circumstance may or may not occur, and that the description includes instances where the event occurs and instances where it does not.

As used herein, the term "solvent" can refer to a single solvent or a mixture of solvents.

Approximating language, as used herein throughout the specification and claims, may be applied to modify any quantitative representation that could permissibly vary without resulting in a change in the basic function to which it is related. Accordingly, a value modified by a term or terms, such as "about", is not to be limited to the precise value specified. In some instances, the approximating language may correspond to the precision of an instrument for measuring the value.

As used herein, the term "aromatic radical" refers to an array of atoms having a valence of at least one comprising at least one aromatic group. The array of atoms having a valence of at least one comprising at least one aromatic group

may include heteroatoms such as nitrogen, sulfur, selenium, silicon and oxygen, or may be composed exclusively of carbon and hydrogen. As used herein, the term "aromatic radical" includes but is not limited to phenyl, pyridyl, furanyl, thienyl, naphthyl, phenylene, and biphenyl radicals. As noted, the aromatic radical contains at least one aromatic group. The aromatic group is invariably a cyclic structure having 4n+2 "delocalized" electrons where "n" is an integer equal to 1 or greater, as illustrated by phenyl groups (n = 1), thienyl groups (n = 1), furanyl groups (n = 1), naphthyl groups (n = 2), azulenyl groups (n = 2), anthraceneyl groups (n = 3) and the like. The aromatic radical may also include nonaromatic components. For example, a benzyl group is an aromatic radical which comprises a phenyl ring (the aromatic group) and a methylene group (the nonaromatic component). Similarly a tetrahydronaphthyl radical is an aromatic radical comprising an aromatic group ($C_6H_3$) fused to a nonaromatic component $-(CH_2)_4^-$. For convenience, the term "aromatic radical" is defined herein to encompass a wide range of functional groups such as alkyl groups, alkenyl groups, alkynyl groups, haloalkyl groups, haloaromatic groups, conjugated dienyl groups, alcohol groups, ether groups, aldehyde groups, ketone groups, carboxylic acid groups, acyl groups (for example carboxylic acid derivatives such as esters and amides), amine groups, nitro groups, and the like. For example, the 4-methylphenyl radical is a $C_7$ aromatic radical comprising a methyl group, the methyl group being a functional group which is an alkyl group. Similarly, the 2-nitrophenyl group is a $C_6$ aromatic radical comprising a nitro group, the nitro group being a functional group. Aromatic radicals include halogenated aromatic radicals such as 4-trifluoromethylphenyl, hexafluoroisopropylidenebis(4-phen-1-yloxy) (i.e., $-OPhC(CF_3)_2PhO-$), 4-chloromethylphen-1-yl, 3-trifluorovinyl-2-thienyl, 3-trichloromethylphen-1-yl (i.e., $3-CCl_3Ph-$), 4-(3-bromoprop-1-yl)phen-1-yl (i.e., $4-BrCH_2CH_2CH_2Ph-$), and the like. Further examples of aromatic radicals include 4-allyloxyphen-1-oxy, 4-aminophen-1-yl (i.e., $4-H_2NPh-$), 3-aminocarbonylphen-1-yl (i.e., $NH_2COPh-$), 4-benzoylphen-1-yl, dicyanomethylidenebis(4-phen-1-yloxy) (i.e., $-OPhC(CN)_2PhO-$), 3-methylphen-1-yl, methylenebis(4-phen-1-yloxy) (i.e., $-OPhCH_2PhO-$), 2-ethylphen-1-yl, phenylethenyl, 3-formyl-2-thienyl, 2-hexyl-5-furanyl, hexamethylene-1,6-bis(4-phen-1-yloxy) (i.e., $-OPh(CH_2)_6PhO-$), 4-hydroxymethylphen-1-yl (i.e., $4-HOCH_2Ph-$), 4-mercaptomethylphen-1-yl (i.e., $4-HSCH_2Ph-$), 4-methylthiophen-1-yl (i.e., $4-CH_3SPh-$), 3-methoxyphen-1-yl, 2-methoxycarbonylphen-l-yloxy (e.g., methyl salicyl), 2-nitromethylphen-1-yl (i.e., $2-NO_2CH_2Ph$), 3-trimethylsilylphen-1-yl, 4-t-butyldimethylsilylphenl-1-yl, 4-vinylphen-1-yl, vinylidenebis(phenyl), and the like. The term "a $C_3$ - $C_{10}$ aromatic radical" includes aromatic radicals containing at least three but no more than 10 carbon atoms. The aromatic radical 1-imidazolyl ($C_3H_2N_2-$) represents a $C_3$ aromatic radical. The benzyl radical ($C_7H_7-$) represents a $C_7$ aromatic radical.

As used herein the term "cycloaliphatic radical" refers to a radical having a valence of at least one, and comprising an array of atoms which is cyclic but which is not aromatic. As defined herein a "cycloaliphatic radical" does not contain an aromatic group. A "cycloaliphatic radical" may comprise one or more noncyclic components. For example, a cyclohexylmethyl group ($C_6H_{11}CH_2-$) is a cycloaliphatic radical which comprises a cyclohexyl ring (the array of atoms which is cyclic but which is not aromatic) and a methylene group (the noncyclic component). The cycloaliphatic radical may include heteroatoms such as nitrogen, sulfur, selenium, silicon and oxygen, or may be composed exclusively of carbon and hydrogen. For convenience, the term "cycloaliphatic radical" is defined herein to encompass a wide range of functional groups such as alkyl groups, alkenyl groups, alkynyl groups, haloalkyl groups, conjugated dienyl groups, alcohol groups, ether groups, aldehyde groups, ketone groups, carboxylic acid groups, acyl groups (for example carboxylic acid derivatives such as esters and amides), amine groups, nitro groups, and the like. For example, the 4-methylcyclopent-1-yl radical is a $C_6$ cycloaliphatic radical comprising a methyl group, the methyl group being a functional group which is an alkyl group. Similarly, the 2-nitrocyclobut-1-yl radical is a $C_4$ cycloaliphatic radical comprising a nitro group, the nitro group being a functional group. A cycloaliphatic radical may comprise one or more halogen atoms which may be the same or different. Halogen atoms include, for example; fluorine, chlorine, bromine, and iodine. Cycloaliphatic radicals comprising one or more halogen atoms include 2-trifluoromethylcyclohex-1-yl, 4-bromodifluoromethylcyclooct-1-yl, 2-chlorodifluoromethylcyclohex-1-yl, hexafluoroisopropylidene-2,2-bis (cyclohex-4-yl) (i.e., $-C_6H_{10}C(CF_3)_2\ C_6H_{10}-$),2-chloromethylcyclohex-1-yl, 3- difluoromethylenecyclohex-1-yl, 4-trichloromethylcyclohex-1-yloxy, 4-bromodichloromethylcyclohex-1-ylthio, 2-bromoethylcyclopent-1-yl, 2-bromopropylcyclohex-1-yloxy (e.g., $CH_3CHBrCH_2C_6H_{10}O-$), and the like. Further examples of cycloaliphatic radicals include 4-allyloxycyclohex-1-yl, 4-aminocyclohex-1-yl (i.e., $H_2NC_6H_{10}-$), 4-aminocarbonylcyclopent-1-yl (i.e., $NH_2COC_5H_8-$), 4-acetyloxycyclohex-1-yl, 2,2-dicyanoisopropylidenebis(cyclohex-4-yloxy) (i.e., $-OC_6H_{10}C(CN)_2C_6H_{10}O-$), 3-methylcyclohex-1-yl, methylenebis(cyclohex-4-yloxy) (i.e., $-OC_6H_{10}CH_2C_6H_{10}O-$), 1-ethylcyclobut-1-yl, cyclopropylethenyl, 3-formyl-2-terahydrofuranyl, 2-hexyl-5-tetrahydrofuranyl, hexamethylene-1,6-bis(cyclohex-4-yloxy) (i.e., $-O\ C_6H_{10}(CH_2)_6C_6H_{10}O-$), 4-hydroxymethylcyclohex-1-yl (i.e., $4-HOCH_2C_6H_{10}-$), 4-mercaptomethylcyclohex-1-yl (i.e., $4-HSCH_2C_6H_{10}-$), 4-methylthiocyclohex-1-yl (i.e., $4-CH_3SC_6H_{10}-$), 4-methoxycyclohex-1-yl, 2-methoxycarbonylcyclohex-1-yloxy ($2-CH_3OCOC_6H_{10}O-$), 4-nitromethylcyclohex-1-yl (i.e., $NO_2CH_2C_6H_{10}-$), 3-trimethylsilylcyclohex-1-yl, 2-t-butyldimethylsilylcyclopent-1-yl, 4-trimethoxysilylethylcyclohex-1-yl (e.g., $(CH_30)_3SiCH_2CH_2C_6H_{10}-$), 4-vinylcyclohexen-1-yl, vinylidenebis(cyclohexyl), and the like. The term "a $C_3$ - $C_{10}$ cycloaliphatic radical" includes cycloaliphatic radicals containing at least three but no more than 10 carbon atoms. The cycloaliphatic radical 2-tetrahydrofuranyl ($C_4H_7O-$ represents a $C_4$ cycloaliphatic radical. The cyclohexylmethyl radical ($C_6H_{11}CH_2-$) represents a $C_7$ cycloaliphatic radical.

As used herein the term "aliphatic radical" refers to an organic radical having a valence of at least one consisting

of a linear or branched array of atoms which is not cyclic. Aliphatic radicals are defined to comprise at least one carbon atom. The array of atoms comprising the aliphatic radical may include heteroatoms such as nitrogen, sulfur, silicon, selenium and oxygen or may be composed exclusively of carbon and hydrogen. For convenience, the term "aliphatic radical" is defined herein to encompass, as part of the "linear or branched array of atoms which is not cyclic" a wide range of functional groups such as alkyl groups, alkenyl groups, alkynyl groups, haloalkyl groups , conjugated dienyl groups, alcohol groups, ether groups, aldehyde groups, ketone groups, carboxylic acid groups, acyl groups (for example carboxylic acid derivatives such as esters and amides), amine groups, nitro groups, and the like. For example, the 4-methylpent-1-yl radical is a $C_6$ aliphatic radical comprising a methyl group, the methyl group being a functional group which is an alkyl group. Similarly, the 4-nitrobut-1-yl group is a $C_4$ aliphatic radical comprising a nitro group, the nitro group being a functional group. An aliphatic radical may be a haloalkyl group which comprises one or more halogen atoms which may be the same or different. Halogen atoms include, for example; fluorine, chlorine, bromine, and iodine. Aliphatic radicals comprising one or more halogen atoms include the alkyl halides trifluoromethyl, bromodifluoromethyl, chlorodifluoromethyl, hexafluoroisopropylidene, chloromethyl, difluorovinylidene, trichloromethyl, bromodichloromethyl, bromoethyl, 2-bromotrimethylene (e.g., $-CH_2CHBrCH_2-$), and the like. Further examples of aliphatic radicals include allyl, aminocarbonyl (i.e., $-CONH_2$), carbonyl, 2,2-dicyanoisopropylidene (i.e., $-CH_2C(CN)_2CH_2-$), methyl (i.e., $-CH_3$), methylene (i.e., $-CH_2-$), ethyl, ethylene, formyl (i.e.,-CHO), hexyl, hexamethylene, hydroxymethyl (i.e.,$-CH_2OH$) mercaptomethyl (i.e., $-CH_2SH$), methylthio (i.e., $-SCH_3$), methylthiomethyl (i.e., $-CH_2SCH_3$), methoxy, methoxycarbonyl (i.e., $CH_3OCO-$), nitromethyl (i.e., $-CH_2NO_2$), thiocarbonyl, trimethylsilyl (i.e., $(CH_3)_3Si-$), t-butyldimethylsilyl, 3-trimethyoxysilylpropyl (i.e., $(CH_3O)_3SiCH_2CH_2CH_2-$), vinyl, vinylidene, and the like. By way of further example, a $C_1$ - $C_{10}$ aliphatic radical contains at least one but no more than 10 carbon atoms. A methyl group (i.e., $CH_3-$) is an example of a $C_1$ aliphatic radical. A decyl group (i.e., $CH_3(CH_2)_9-$) is an example of a $C_{10}$ aliphatic radical.

Disclosed herein is an organophosphonium salt

Phenone-containing organic salt are useful in the preparation of organoclay compositions and polymer-organoclay composite compositions derived from said organoclay compositions Thus, in one embodiment, the present invention provides access to polymer-organoclay composite compositions comprising phenone-containing salts comprising quaternary phosphonium cations having structure XXXIII

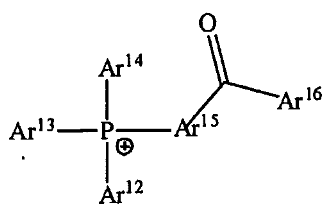

XXXIII

wherein $Ar^{12}$, $Ar^{13}$, $Ar^{14}$ and $Ar^{15}$ are independently $C_2$-$C_{50}$ aromatic radicals; and $Ar^{16}$ is a $C_2$-$C_{200}$ aromatic radical, or a polymer chain comprising at least one aromatic group.

Phenone-containing salts comprising a quaternary phosphonium cation having structure XXXIII are illustrated in Table IV. Phenone-containing salts comprising quaternary phosphonium cation XXXIII may be prepared as disclosed herein. Phenone-containing salts comprising quaternary phosphonium cation XXXIII may be incorporated into organoclay compositions and polymer-organoclay composite compositions using methods disclosed herein

Table IV Illustrative Phenone-Containing Salts Comprising Cation XXXIII

| Entry | 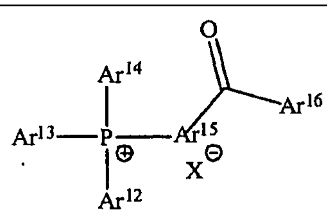 | | | | | |
|---|---|---|---|---|---|---|
| | $Ar^{12}$ | $Ar^{13}$ | $Ar^{14}$ | $Ar^{15}$ | $Ar^{16}$ | Counterion $X^-$ |
| 4a | Ph | Ph | Ph | 1,4-phenylene | Ph | $Cl^-$ |
| 4b | Ph | Ph | Ph | 1,3-phenylene | Ph | $Cl^-$ |
| 4c | O-tolyl | O-tolyl | O-tolyl | 1,4-phenylene | 2-napthyl | $I^-$ |
| 4d | 3,4-xylyl | 3,4-xylyl | 3,4-xylyl | pyridine -2,6-diyl | Ph | $CF_3SO_3^-$ |

In one embodiment, the present invention provides access to a composite comprising a phenone-containing salt comprising quaternary phosphonium cation XXXIII wherein $Ar^{16}$ is a polyether ketone polymer chain. Such a salt may be prepared, for example by reacting a polyetherketone comprising one or more terminal chlorobenzoyl groups with a triarylphosphine, for example triphenylphosphine, in a solvent and optionally in the presence of a catalyst.

In one embodiment, the present invention provides access to a composite comprising a phenone-containing salt comprising quaternary phosphonium cation XXXIII wherein $Ar^{16}$ is a polymer chain having a number average molecular weight $M_n$ in a range from about 1000 to about 50,000 gram per mole. In another embodiment, the present invention provides access to a composite comprising a phenone-containing salt comprising quaternary phosphonium cation XXXIII wherein $Ar^{16}$ is a polymer chain having a number average molecular weight $M_n$ in a range from about 1000 to about 20,000 grams per mole. In yet another embodiment, the present invention provides access to a composite comprising a phenone-containing salt comprising quaternary phosphonium cation XXXIII wherein $Ar^{16}$ is a polymer chain having a number average molecular weight $M_n$ in a range from about 1000 to about 5,000 grams per mote.

In one embodiment, the present invention provides access to a composite comprising a phenone-containing salt comprising quaternary phosphonium cation XXXIII wherein $Ar^{16}$ is a polyetherimide polymer chain having a number average molecular weight $M_n$ in a range from about 1000 to about 50,000 grams per mole. In another embodiment, the present invention provides access to a composite comprising a phenone-containg salt comprising quaternary phosphonium cation XXXIII wherein $Ar^{16}$ is a polyetherimide polymer chain having a number average molecular weight $M_n$ in a range from about 1000 to about 20,000 grams per mole.

In one particular aspect, the present invention provides access to a composite comprising a phenone-containing salt comprising quaternary phosphonium cation XXXIV. One of ordinary skill in the art will recognize that cation falls within the scope of the genus defined by structure XXXIII. Thus, structure XXXIV represents the case wherein $Ar^{15}$ of structure XXXIII is orthophenyleneoxy and $Ar^{16}$ is 4-(2-triphenylphosphonium phenyleneoxy)phenyl.

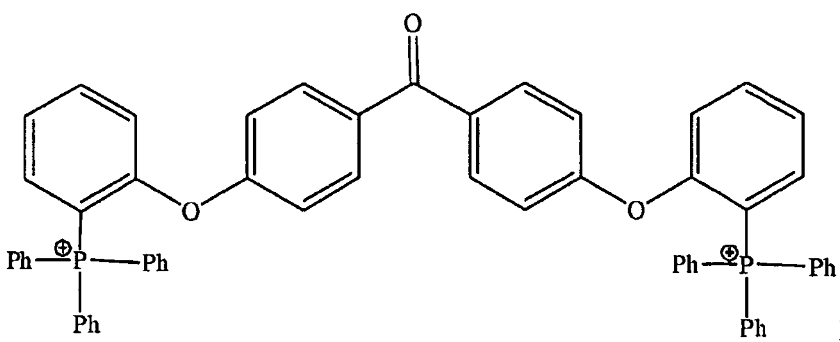

XXXIV

In another particular embodiment, the present invention provides access to a composite comprising a phenone-containing salt comprising quaternary phosphonium cation XXXV.

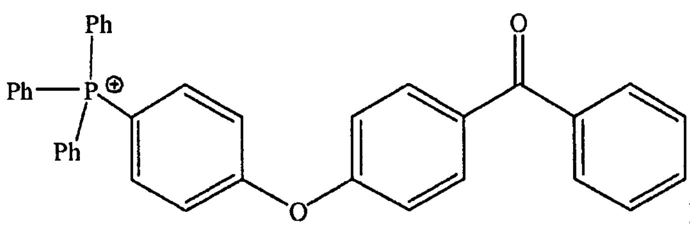

XXXV.

In one embodiment, the present invention provides a composite comprising a polymeric phenone-containing salt comprising a polymeric quaternary phosphonium cation having structure XXXVII

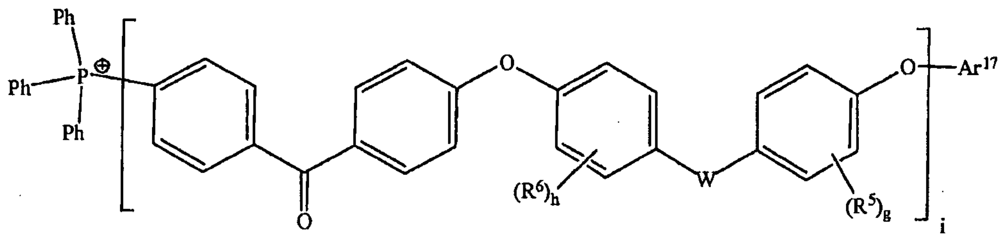

XXXVII

wherein "g" and "h" are independently a number from 0 to 4; W is a bond, a divalent $C_1$-$C_{20}$ aliphatic radical, a divalent $C_5$-$C_{20}$ cycloaliphatic radical, a divalent $C_2$-$C_{20}$ aromatic radical, an oxygen linking group, a sulfur linking group, a $SO_2$ linking group, or a Se linking group; $R^5$ and $R^6$ are independently at each occurrence a halogen atom, a $C_1$-$C_{20}$ aliphatic radical, a $C_5$-$C_{20}$ cycloaliphatic radical, or a $C_2$-$C_{20}$ aromatic radical; "i" is a number from about 10 to about 1000; and $Ar^{17}$ is a $C_{10}$-$C_{200}$ aromatic radical, or a polymer chain comprising at least one aromatic group.

Polymeric phenone-containing salts comprising a polymeric quaternary phosphonium cation having structure XXXVII are illustrated in Table V below.

Table V

| Entry | Structure |
| --- | --- |
| 5a | 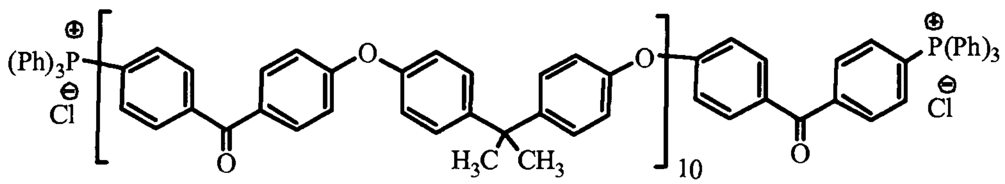 |
| 5b | 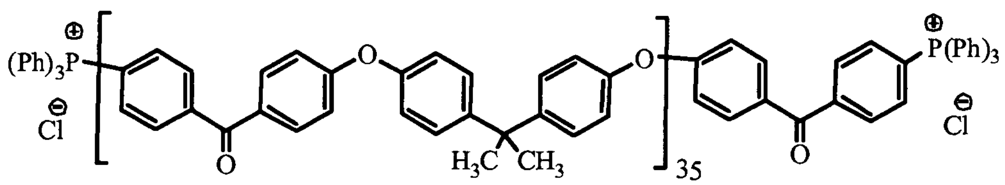 |
| 5c | 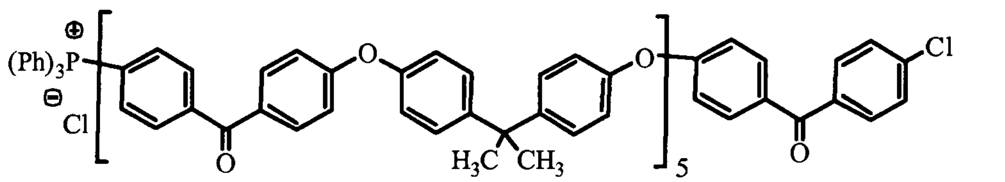 |
| 5d | 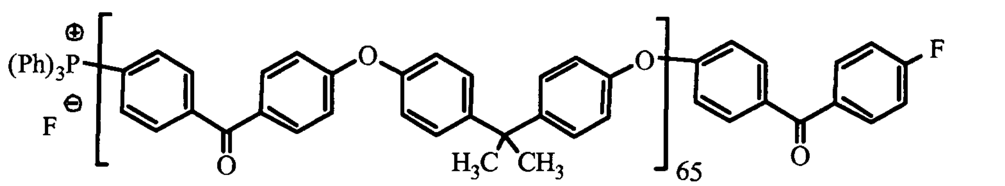 |
| 5e | 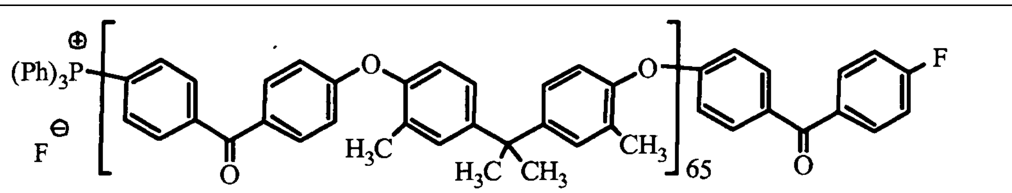 |

As Entries 5a and 5b in Table V make clear, in one embodiment $Ar^{17}$ is an aromatic radical comprising structure XXXVIII.

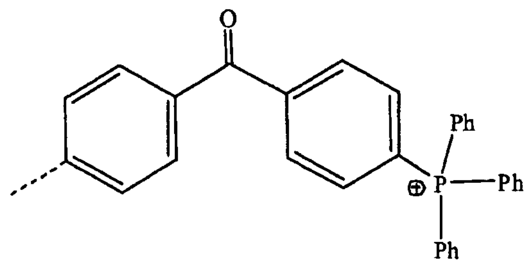

XXXVIII

Polymeric phenone-containing salts such as those illustrated in Table V may be prepared by from the corresponding halogen-substituted polyetherketones by reaction with a triarylphosphine as described herein. Halogen-substituted polyetherketones are available by methods known to one of ordinary skill in the art and can be prepared, for example, by reacting the disodium salt of a bisphenol (e.g. the disodium salt of bisphenol A) with a molar excess (e.g. 5 mole percent excess) of a dihalo benzophenone (e.g. 4,4'-difluorobenzophenone) in an inert solvent (e.g. orthodichorobenzene) at elevated temperature (e.g. 130-180°C) in the presence of phase transfer catalyst (e.g. hexaethyl guanidinium chloride).

The organoclay compositions comprise alternating inorganic silicate layers and organic layers. The inorganic silicate layers may be derived from any suitable source, for example natural clay. In one embodiment, the inorganic silicate layers are derived from synthetic clay. Suitable clays include kaolinite, dickite, nacrite, halloysite, antigorite, chrysotile, pyrophyllite, montmorillonite, beidellite, nontronite, saponite, sauconite, stevensite, hectorite, tetrasilylic mica, sodium taeniolite, muscovite, margarite, talc, vermiculite, phlogopite, xanthophyllite, chlorite, and combinations thereof. In a particular embodiment, the inorganic silicate layers are derived from montmorillonite clay.

The organoclay compositions are characterized by an interlayer distance between the inorganic silicate layers of from 5 to about 100 Angstroms. The organoclay compositions can be characterized by an interlayer distance between the inorganic silicate layers of from 10 to about 100 angstroms, and in another embodiment from about 20 to about 100 angstroms.

The organoclay compositions can be prepared by (a) contacting in a first reaction mixture a quaternary organic salt with a layered silicate in the presence of a solvent, and (b) isolating the product organoclay composition.

As noted, the organoclay compositions may be prepared by contacting a quaternary organic salt with a layered silicate in the presence of a solvent. In one embodiment, the layered silicate is a natural clay. In another embodiment, the layered silicate is a synthetic clay. In one embodiment, the layered silicate comprises an inorganic clay selected from the group consisting of kaolinite, dickite, nacrite, halloysite, antigorite, chrysotile, pyrophyllite, montmorillonite, beidellite, nontronite, saponite, sauconite, stevensite, hectorite, tetrasilylic mica, sodium taeniolite, muscovite, margarite, talc, vermiculite, phlogopite, xanthophyllite, chlorite, and combinations thereof. In another embodiment, the layered silicate comprises montmorillonite clay.

As noted, the organoclay compositions may be prepared by contacting a quaternary organic salt with a layered silicate in the presence of a solvent. In one embodiment, the solvent employed comprises an organic solvent, for example acetone. In another embodiment, the solvent employed comprises water. In yet another embodiment, the solvent employed comprises both water and an organic solvent, for example aqueous methanol containing about 10 percent by weight water and about 90 percent by weight methanol.

The organoclay composition may be isolated using conventional techniques such as filtration, centrifugation, antisolvent precipitation, decantation, and the like. Various techniques suitable for isolating the organoclay compositions provided by the present invention are disclosed in the experimental part of this disclosure.

In one embodiment, the present invention provides an organoclay composition comprising alternating inorganic silicate layers and organic layers, said organic layers comprising a quaternary phosphonium cation having structure XXXIII

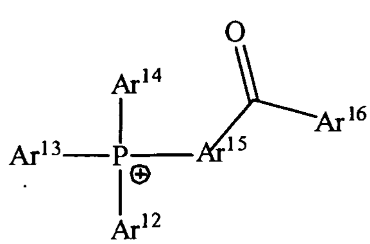

XXXIII

wherein $Ar^{12}$, $Ar^{13}$, $Ar^{14}$ and $Ar^{15}$ are independently $C_2$-$C_{50}$ aromatic radicals; and $Ar^{16}$ is a $C_2$-$C_{200}$ aromatic radical, or a polymer chain comprising at least one aromatic group.

Quaternary phosphonium cation having structure XXXIII are at times herein referred to as "phenone-containing organophosphonium cations". Quaternary phosphonium cations having structure XXXIII are illustrated by the cationic components of the organophosphonium salts disclosed in Table IV herein.

In one embodiment, the present invention provides an organoclay composition comprising a quaternary phosphonium cation having structure XXXIV.

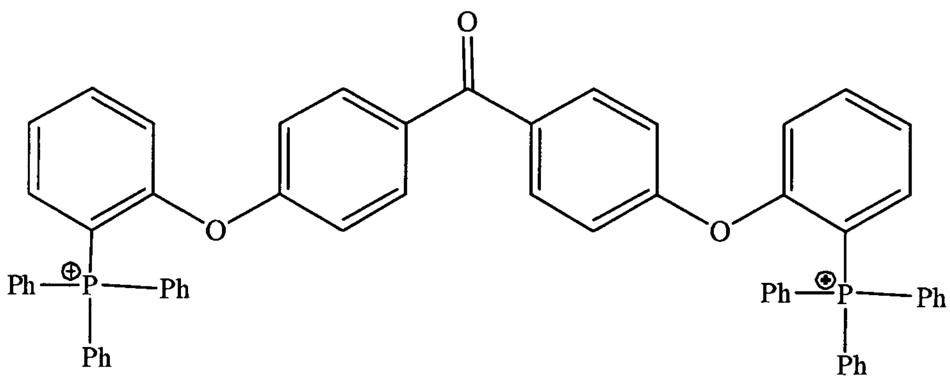

XXXIV

In another embodiment, the present invention provides an organoclay composition comprising a quaternary phosphonium cation having structure XXXV.

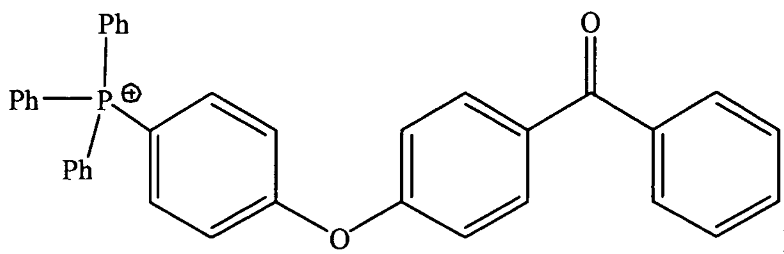

XXXV

In yet another embodiment, the present invention provides an organoclay composition comprising a polymeric quaternary phosphonium cation having structure XXXVII

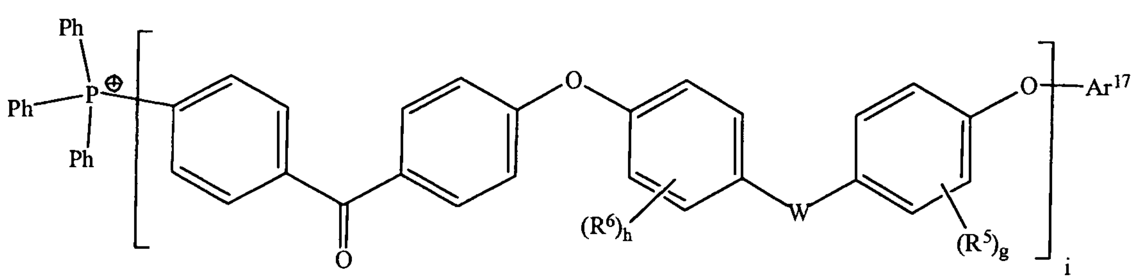

XXXVII

wherein "g" and "h" are independently a number from 0 to 4; W is a bond, a divalent $C_1$-$C_{20}$ aliphatic radical, a divalent $C_5$-$C_{20}$ cycloaliphatic radical, a divalent $C_2$-$C_{20}$ aromatic radical, an oxygen linking group, a sulfur linking group, a $SO_2$ linking group, or a Se linking group; $R^5$ and $R^6$ are independently at each occurrence a halogen atom, a $C_1$-$C_{20}$ aliphatic radical, a $C_5$-$C_{20}$ cycloaliphatic radical, or a $C_2$-$C_{20}$ aromatic radical; "i" is a number from about 10 to about 1000; and $Ar^{17}$ is a $C_{10}$-$C_{200}$ aromatic radical, or a polymer chain comprising at least one aromatic group. In one embodiment, $Ar^{17}$ is an aromatic radical having structure XXXVIII.

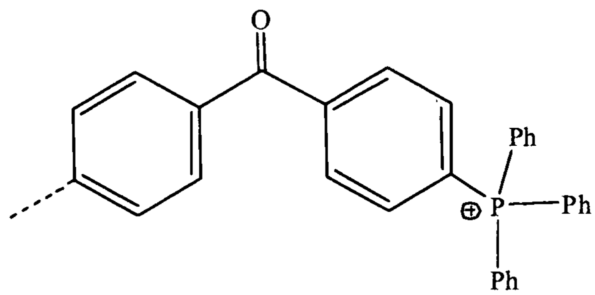

XXXVIII

Polymeric quaternary phosphonium cations having structure XXXVII are illustrated by the cationic components of the polymeric, organophosphonium salts disclosed in Table V herein.

In one embodiment, the present invention provides a polymer-organoclay composite composition comprising (a) a polymeric resin and (b) an organoclay composition comprising alternating inorganic silicate layers and organic layers, wherein the organic layers comprise a quaternary organic cation.

In one embodiment, the polymeric resin comprises an amorphous thermoplastic polymer. In another embodiment, the polymeric resin comprises a crystalline thermoplastic polymer. In another embodiment, the polymeric resin comprises an amorphous thermoplastic polymer and a crystalline thermoplastic polymer. Amorphous thermoplastic polymers are illustrated by PPSU (polyphenylene sulfone), PEI (polyetherimide), PES (polyethersulfone), PC (Polycarbonate), PPO (polyphenylene ether), PMMA (poly methyl methacrylate), ABS, (acrylonitrile butadiene styrene), and PS (polystyrene). Crystalline thermoplastic resins are illustrated by PFA (perfluoro alkoxyalkane), MFA (co-polymer of tetrafluoro ethylene and perfluorinated vinyl ether), FEP (fluorinated ethylene propylene polymers), PPS (polyphenylene sulfide), PEK (polyether ketone), PEEK (polyether-ether ketone), ECTFE (ethylene chloro trifluoro ethylene), PVDF (polyvinylidene fluoride), PTFE (polytetrafluoroethylene), PET (polyethylene terephthalate), POM (polyacetal), PA (polyamide), UHMW-PE (ultra high molecular weight polyethylene), PP (polypropylene), PE (polyethylene), HDPE (high density polyethylene), LDPE (low density polyethylene) and advanced engineering resins such as PBI (polybenzimidizole) and PAI (polyamide-imide), polyphenylenes, polybenzoxazoles, polybenzthiazoles, as well as blends and co-polymers thereof.

In one embodiment, the polymeric resin is selected from the group consisting of polyetherimides, polyamides, polyesters, polyarylene sulfides, polyarylene ethers, polyether sulfones, polyether ketones, polyether ether ketones, polyphenylenes, polycarbonates, and a combination comprising at least one of the foregoing polymers. In a particular embodiment, the polymeric resin comprises a polyetherimide resin, for example ULTEM, available from GE Plastics, Inc. In another particular embodiment, the polymeric resin comprises a polyphenylene resin, for example PRIMOSPIRE, available through Solvay, Inc. In yet another particular embodiment, the polymeric resin comprises polyether sulfone, for example RADEL A, available from Solvay, Inc. In still yet another particular embodiment, the polymeric resin comprises a polyether ketone.

The organoclay composition present in the polymer-organoclay composite composition is preferably highly exfoliated, meaning that the distance between inorganic silicate layers is large relative to the distance between the corresponding silicate layers in the same organoclay composition prior to its incorporation into the polymer matrix of the polymer-organoclay composite composition. The organoclay compositions provided by the present invention are designed to promote relatively facile separation of the silicate layers as the organoclay composition is subjected to a shearing force in the presence of a Polymeric resin or a solvent. Thus, in one embodiment, the polymer-organoclay composite composition provided by the present invention comprises an organoclay composition comprising alternating inorganic silicate layers and organic layers wherein the alternating inorganic silicate layers are highly dispersed relative to the organoclay composition from which the silicate layers of the polymer-organoclay composite composition are derived.

In one embodiment, the polymer-organoclay composite composition provided by the present invention comprises inorganic silicate layers derived from an inorganic clay selected from the group consisting of kaolinite, dickite, nacrite, halloysite, antigorite, chrysotile, pyrophyllite, montmorillonite, beidellite, nontronite, saponite, sauconite, stevensite, hectorite, tetrasilylic mica, sodium taeniolite, muscovite, margarite, talc, vermiculite, phlogopite, xanthophyllite, chlorite, and combinations thereof. In one embodiment, the inorganic clay is first converted to an organoclay composition and the intermediate organoclay composition is then used in the preparation of the polymer-organoclay composite composition. In one embodiment, the organoclay composition employed in the preparation of the polymer-organoclay composite composition is characterized by an interlayer distance of from about 5 to about 100 Angstroms. Although a substantial amount of the organoclay composition employed may be highly exfoliated in the polymer-organoclay composite composition, at least a portion of the organoclay composition employed retains an interlayer distance in the 5 to about 100 Angstrom range.

In one embodiment, the present invention provides an article comprising a polymer-organoclay composite composition provided by the present invention. In one embodiment, the article is a film. In a particular embodiment, the article is an extruded film. In another particular embodiment, the article is a solvent cast film. Extruded films can be prepared using techniques described herein. Solvent cast films comprising a polymer-organoclay composite composition of the present invention may be prepared by art recognized methods.

In a particular embodiment, the present invention provides a solvent cast film comprising a polyetherimide having a dianhydride component and a diamine component and a glass transition temperature (Tg) between about 180˚C and 450˚C, and wherein the film has: a) a CTE of less than 70 ppm/˚C; b) a thickness of between about 0.1μm and 250μm; and, c) contains less than 5% residual solvent by weight.

In one embodiment, the present invention provides a polymer-organoclay composite composition comprising a polymeric resin which is a polyetherimide having a dianhydride component and a diamine component. This means that the polyetherimide comprises structural units derived from at least one dianhydride and at least one diamine. Polyetherimides having a dianhydride component and a diamine component and a required Tg can be prepared by reacting one or more diamines with one or more dianhydrides under condensation polymerization conditions (e.g. refluxing orthodichorobenzene in a reaction vessel equipped to remove water of reaction in the presence of a catalyst sodium phenyl phosphinate (SPP)).

Suitable dianhydrides include:

2,2-bis[4-(3,4-dicarboxyphenoxy)phenyl]propane dianhydride;

4,4'-bis(3,4-dicarboxyphenoxy)diphenyl ether dianhydride;

4,4'-bis(3,4-dicarboxyphenoxy)diphenyl sulfide dianhydride;

4,4'-bis(3,4-dicarboxyphenoxy)benzophenone dianhydride;

4,4'-bis(3,4-dicarboxyphenoxy)diphenyl sulfone dianhydride;

2,2-bis[4-(2,3-dicarboxyphenoxy)phenyl]propane dianhydride;

4,4'-bis(2,3-dicarboxyphenoxy)diphenyl ether dianhydride;

4,4'-bis(2,3-dicarboxyphenoxy)diphenyl sulfide dianhydride;

4,4'-bis(2,3-dicarboxyphenoxy)benzophenone dianhydride;

4,4'-bis(2,3-dicarboxyphenoxy)diphenyl sulfone dianhydride;

4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride;

4-(2,3-dicarboxyphenoxy)-4'-(3,4-dicarboxyphenoxy)diphenyl sulfide dianhydride;

4-(2,3-dicarboxyphenoxy)-4'-(3,4-dicarboxyphenoxy)benzophenone dianhydride;

4-(2,3-dicarboxyphenoxy)-4'-(3,4-dicarboxyphenoxy)diphenyl sulfone dianhydride;

1,3-bis(2,3-dicarboxyphenoxy)benzene dianhydride;

1,4-bis(2,3-dicarboxyphenoxy)benzene dianhydride;

1,3-bis(3,4-dicarboxyphenoxy)benzene dianhydride;

1,4-bis(3,4-dicarboxyphenoxy)benzene dianhydride;

cyclobutane tetracarboxylic dianhydride;

cyclopentane tetracarboxylic dianhydride;

cyclohexane-1,2,5,6-tetracarboxylic dianhydride;

2,3,5-tricarboxycyclopentylacetic dianhydride;

5- (2, 5-dioxotetrahydrofural)-3-methyl-3-cyclohexene-1,2-dicarboxylic dianhydride;

1,3,3a, 5-dioxo-3-furanyl)- naphtho [1,2,-c]-furan-1,3-dione;

3,5,6-tricarboxynorbornane-2-acetic dianhydride;

2,3,4,5-tetrahydrofuran tetracarboxylic dianhydride;

3,3', 4,4'-diphenyl tetracarboxylic dianhydride;

3,3', 4,4'-benzophenonetetracarboxylic dianhydride;

naphthalic dianhydrides such as (2,3,6,7-naphthalic dianhydride etc.);

3,3', 4,4'-biphenylsulphonictetracarboxylic dianhydride;

3,3', 4,4'-biphenylethertetracarboxylic dianhydride;

3,3', 4,4'-dimethyldiphenylsilane tetracarboxylic dianhydride;

4,4'-bis (3,4-dicarboxyphenoxy) diphenylsulfide dianhydride;

4,4'-bis (3,4-dicarboxyphenoxy) diphenylsulphone dianhydride;

4,4'-bis (3,4-dicarboxyphenoxy) diphenylpropane dianhydride;

3,3', 4,4'-perfluoropyridenediphthalic dianhydride;

3,3', 4,4'-biphenyltetracarboxylic dianhydride;

bis (phthalic) phenylsulphineoxide dianhydride;

p-phenylene- bis (triphenylphthalic) dianhydride;

m-phenylene-bis (triphenylphthalic) dianhydride;

bis (triphenylphthalic)-4,4'-diphenylether dianhydride;

bis (triphenylphthalic)-4,4'-diphenylmethane dianhydride;

2,2'-bis-(3,4-dicarboxyphenyl)hexafluoro-prpoane dianhydride;

4,4'-oxydiphthalic anhydride;

pyromellitic dianhydride;

3,3',4,4'- diphenylsulfone tetracarboxylic dianhydride;

4',4' - bisphenol a dianhydride;

hydroquinnone diphthalic anhydride;

ethylene glycol bis trimellitic anhydride;

6,6'-bis(3,4-dicarboxyphenoxy)-2,2',3,3'-tetrahydro-3,3,3',3'-tetramethyl-1,1'-spirobi[1h-indene] dianhydride;

7,7'-bis(3,4-dicarboxyphenoxy)- 3,3',4,4'-tetrahydro-4,4,4',4'-tetramethyl-2,2'-spirobi[2h-1-benzopyran] dianhydride;

1,1'-bis[1-(3,4-dicarboxyphenoxy) -2-methyl-4-phenyl]cyclohexane dianhydride;

3.3',4,4'-diphenylsulfone tetracarboxylic dianhydride;

3.3',4,4'-diphenylsulfide tetracarboxylic dianhydride;

3.3',4,4'-diphenylsulfoxide tetracarboxylic dianhydride;

3,4'-oxydiphthalic anhydride;

3,3'-oxydiphthalic anhydride;

3,3'-benzophenone tetracarboxylic dianhydride;

4,4'-carbonyldiphthalic anhydride;

3.3',4,4'-diphenylmethane tetracarboxylic dianhydride;

2,2-bis(4-(3,3-dicarboxyphenyl)propane dianhydride;

2,2-bis(4-(3,3-dicarboxyphenyl)hexafluropropane dianhydride;

(3,3',4,4'-diphenyl)phenylphosphine tetracarboxylic dianhydride;

(3,3',4,4'-diphenyl)phenylphosphineoxide tetracarboxylic dianhydride;

2,2'-dichloro-3,3',4,4'-biphenyltetracarboxylic dianhydride;

2,2'-dimethyl-3,3',4,4'-biphenyltetracarboxylic dianhydride;

2,2'-dicyano-3,3',4,4'-biphenyltetracarboxylic dianhydride;

2,2'-dibromo-3,3',4,4'-biphenyltetracarboxylic dianhydride;

2,2'-diiodo-3,3',4,4'-biphenyltetracarboxylic dianhydride;

2,2'-ditrifluromethyl-3,3',4,4'-biphenyltetracarboxylic dianhydride;

2,2'-bis(1-methyl-4-phenyl)-3,3',4,4'-biphenyltetracarboxylic dianhydride;

2,2'-bis(1-trifluromethyl-2-phenyl)-3,3',4,4'-biphenyltetracarboxylic dianhydride;

2,2'-bis(1-trifluromethyl-3-phenyl)-3,3',4,4'-biphenyltetracarboxylic dianhydride;

2,2'-bis(1-trifluromethyl-4-phenyl)-3,3',4,4'-biphenyltetracarboxylic dianhydride;

2,2'-bis(1-phenyl-4-phenyl)-3,3',4,4'-biphenyltetracarboxylic dianhydride;

4,4' - bisphenol a dianhydride;

5,5'-[1,4-phenylenebis(oxy)]bis[1,3-isobenzofurandione];

3,3',4,4'-diphenylsulfoxide tetracarboxylic dianhydride;

4,4'-carbonyldiphthalic anhydride;

3,3',4,4'-diphenylmethane tetracarboxylic dianhydride;

2,2'-bis(1,3-trifluromethyl-4-phenyl)-3,3',4,4'-biphenyltetracarboxylic dianhydride; isomers thereof; and combinations thereof.

Suitable diamines include: ethylenediamine; propylenediamine; trimethylenediamine; diethylenetriamine; triethylenetetramine; hexamethylenediamine; heptamethylenediamine; octamethylenediamine; nonamethylenediamine; decamethylenediamine; 1,12-dodecanediamine; 1,18-octadecanediamine; 3-methylheptamethylenediamine; 4,4-dimethylheptamethylenediamine; 4-methylnonamethylenediamine; 5-methylnonamethylenediamine; 2,5-dimethylhexamethylenediamine; 2,5-dimethylheptamethylenediamine; 2, 2-dimethylpropylenediamine; N-methyl-bis (3-aminopropyl) amine; 3-methoxyhexamethylenediamine; 1,2-bis(3-aminopropoxy) ethane; bis(3-aminopropyl) sulfide; 1,4-cyclohexanediamine; bis-(4-aminocyclohexyl) methane; m-phenylenediamine; p-phenylenediamine; 2,4-diaminotoluene; 2,6-diaminotoluene; m-xylylenediamine; p-xylylenediamine; 2-methyl-4,6-diethyl-1,3-phenylene-diamine; 5-methyl-4,6-diethyl-1,3-phenylene-diamine; benzidine; 3,3'-dimethylbenzidine; 3,3'-dimethoxybenzidine; 1,5-diaminonaphthalene; bis(4-aminophenyl) methane; bis(2-chloro-4-amino-3, 5-diethylphenyl) methane; bis(4-aminophenyl) propane; 2,4-bis (b-amino-t-butyl) toluene; bis(p-b-amino-t-butylphenyl) ether; bis(p-b-methyl-o-aminophenyl) benzene, bis(p-b-methyl-o-aminopentyl) benzene, 1, 3-diamino-4-isopropylbenzene, bis(4-aminophenyl) sulfide, bis (4-aminophenyl) sulfone, bis(4-aminophenyl) ether, and, 1,3-bis(3-aminopropyl) tetramethyldisiloxane; 4,4'-diaminodiphenylpropane; 4,4'-diaminodiphenylmethane (4,4'-methylenedianiline); 4,4'-diaminodiphenyl sulfide; 4,4'-diaminodiphenyl sulfone; 3,3'-diaminodiphenyl sulfone; 4,4'-diaminodiphenyl sulfide; 3,3'-diaminodiphenyl sulfide; 4,4'-diaminodiphenyl ether (4,4'-oxydianiline); 1,5-diaminonaphthalene; 3,3'dimethylbenzidine; 3-methylhaptamethylenediamine; 4,4-dimethylhaptamethylenediamine; 2,11-dodecanediamine; octamethylenediamine; bis(3-aminopropyl)tetramethyldisiloxane; bis(4-aminobutyl)tetramethyldisiloxane; bis(p-amino-t-butylphenyl)ether; bis(p-methyl-o-aminophenyl)benzene; bis(p-methyl-o-aminopentyl)benzene; 2,2',3,3'-tetrahydro-3,3,3',3'-tetramethyl-1,1'-spirobi[1H-indene]-6,6'-diamine; 3,3',4,4'-tetrahydro-4,4,4',4'-tetramethyl-2,2'-spirobi[2H-1-benzopyran]-7,7'-diamine; 1,1'-bis[1-amino-2-methyl-4-phenyl]cyclohexane; isomers thereof; and combinations thereof.

The polymer-organoclay composite compositions provided by the present invention comprise an organoclay composition. In one embodiment, the organoclay compositions employed are those organoclay compositions provided by the present invention. Thus, in one embodiment, the polymer-organoclay composite composition comprises at least one organoclay composition comprising a phenone-containing organophosphonium cation having structure XXXIII.

In one embodiment, the present invention provides an article comprising a polymer-organoclay composite composition, said composition comprising (a) a polymeric resin; and (b) an organoclay composition comprising alternating inorganic silicate layers and organic layers, said organic layers comprising a quaternary phosphonium cation having structure XXXIII.

In another embodiment, the present invention provides a method for the preparation of a polymer-organoclay composite composition, said method comprising contacting under melt mixing conditions a polymeric resin and an organoclay composition comprising alternating inorganic silicate layers and organic layers, said organic layers comprising a quaternary phosphonium cation having structure XXXIII.

MELT MIXING ROUTES TO POLYMER-ORGANOCLAY COMPOSITE COMPOSITION

In one embodiment, the present invention provides a method for the preparation of a polymer-organoclay composite composition comprising melt mixing a quaternary organoclay composition comprising alternating inorganic silicate layers and organic layers, said organic layers comprising a quaternary organic cation with a polymeric resin at a temperature in a range between about 300°C and about 450°C to provide a polymer-organoclay composite composition, said polymer-organoclay composite composition being characterized by a percent exfoliation of at least 10 percent. A quaternary organoclay composition is an organoclay composition comprising a quaternary organic cation.

There is no particular limitation on the quaternary organic cation employed, other than it must be sufficiently stable during the melt mixing step to enable a significant level of exfoliation of the organoclay composition in the polymer matrix. A quaternary organic cation is considered stable if more than about 90 percent of the quaternary organic cation remains following a melt mixing step of duration and intensity sufficient to achieve a percent exfoliation of at least 10 percent.

In one embodiment, the inorganic silicate layers are derived from an inorganic clay selected from the group consisting of kaolinite, dickite, nacrite, halloysite, antigorite, chrysotile, pyrophyllite, montmorillonite, beidellite, nontronite,

saponite, sauconite, stevensite, hectorite, tetrasilylic mica, sodium taeniolite, muscovite, margarite, talc, vermiculite, phlogopite, xanthophyllite chlorite, and combinations thereof. Typically, the inorganic clay is first converted to an organoclay composition comprising the quaternary organic cation. In some embodiments, the organoclay composition may be prepared in the presence of the polymeric resin. Suitable organoclay compositions include those organoclay compositions disclosed herein. In one embodiment, the organoclay composition employed is characterized by an interlayer distance of from about 5 to about 100 Angstroms. Under such circumstances, at least a portion of the product polymer-organoclay composite composition will be characterized by a an interlayer distance of from about 5 to about 100 Angstroms as well.

In one embodiment, the polymer-organoclay composite composition prepared by melt mixing a quaternary organoclay composition comprising a quaternary organic cation with a polymeric resin at a temperature in a range between about 300˚C and about 450˚C comprises a polyarylene sulfide, for example polyphenylene sulfide (PPS). In another embodiment, the polymer-organoclay composite composition prepared by melt mixing a quaternary organoclay composition comprising a quaternary organic cation with a polymeric resin at a temperature in a range between about 300˚C and about 450˚C comprises a polyethersulfone, for example a copolymer comprising structural units derived from bisphenol A and bis(4-chlorophenyl)sulfone. In yet another embodiment, the polymer-organoclay composite composition prepared by melt mixing a quaternary organoclay composition comprising a quaternary organic cation with a polymeric resin at a temperature in a range between about 300˚C and about 450˚C comprises a polyether ketone, for example a copolymer comprising structural units derived from bisphenol A and 4,4'-dichlorobenzophenonc.

The melt mixing may be carried out using any melt mixing technique which combines the ability to heat the organoclay composition and the polymeric resin at a temperature in a range between about 300˚C and about 450˚C under sufficient shear to achieve a percent exfoliation of the organoclay composition in the polymeric resin of at least 10 percent. Typically, an extruder may be used to effect melt mixing. In one embodiment, the extruder is a vented, twin-screw extruder. In another embodiment, the extruder is a vented, single screw reciprocating extruder. In one embodiment, melt mixing is carried out in a kneader. In one embodiment, melt mixing is of sufficient duration and intensity to achieve a percent exfoliation of the organoclay composition in the polymeric resin of at least 20 percent. In yet another embodiment, melt mixing is of sufficient duration and intensity to achieve a percent exfoliation of the organoclay composition in the polymeric resin of at least 30 percent.

In one embodiment, the present invention provides an article comprising a polymer-organoclay composite composition prepared by melt mixing (a) a quaternary organoclay composition comprising alternating inorganic silicate layers and organic layers, the organic layers comprising a quaternary organic cation; with (b) a polymeric resin a temperature in a range between about 300˚C and about 450˚C under sufficient shear to achieve a percent exfoliation of the organoclay composition in the polymeric resin of at least 10 percent.

In one embodiment, the present invention provides a method of making a polymer-organoclay composite composition comprising melt mixing a quaternary organoclay composition comprising alternating inorganic silicate layers and organic layers, said organic layers comprising a quaternary organic cation with a polymeric resin comprising at least one polymer selected from the group consisting of polyamides, polyesters, polyarylene sulfides, polyarylene ethers, polyether sulfones, polyether ketones, polyether ether ketones, polyphenylenes, and polycarbonates, said polymeric resin being substantially free of polyetherimides; said melt mixing being carried out at a temperature in a range between about 300˚C and about 450˚C to provide a polymer-organoclay composite composition, said polymer-organoclay composite composition being characterized by a percent exfoliation of at least 10 percent. A polymeric resin is substantially free of polyetherimides when it contains less than 5 weight percent polyetherimide based upon a total weight of the polymeric resin. Polymeric resins which contain 0 weight percent polyetherimide are also said to be substantially free of polyetherimides.

In another embodiment, the present invention provides an article comprising a polymer-organoclay composite composition, the polymer-organoclay composite composition comprising (a) a quaternary organoclay composition comprising alternating inorganic silicate layers and organic layers, the organic layers comprising a quaternary organic cation; and (b) a polymeric resin comprising at least one polymer selected from the group consisting of polyamides, polyesters, polyarylene sulfides, polyarylene ethers, polyether sulfones, polyether ketones, polyether ether ketones, polyphenylenes, and polycarbonates; the polymeric resin being substantially free of polyetherimides; wherein the polymer-organoclay composite composition is characterized by a percent exfoliation_of at least 10 percent. In one embodiment, the article is a film. In another embodiment, the article is a solvent cast film comprising a polyetherimide having a dianhydride component and a diamine component and a Tg of between about 180˚C and 450˚C, and wherein the film has: a) a CTE of less than 70 ppm/˚C; b) a thickness of between about 0.1$\mu$m and 250$\mu$m; and, c) contains less than 5% residual solvent by weight.

In one embodiment, the present invention provides a method for making a polymer-organoclay composite composition comprising melt mixing in an extruder, a quaternary organoclay composition comprising alternating inorganic silicate layers and organic layers, said organic layers comprising a quaternary organic cation with a polymeric resin comprising a polyether sulfone, said polymeric resin being substantially free of polyetherimide; said melt mixing being

carried out at a temperature in a range between about 300°C and about 450°C to provide a polymer-organoclay composite composition, said polymer-organoclay composite composition being characterized by a percent exfoliation of at least 10 percent.

In one embodiment, the present invention provides a method of making a polymer-organoclay composite composition comprising melt mixing a quaternary organoclay composition comprising alternating inorganic silicate layers and organic layers, said organic layers comprising a quaternary organic cation with a polyetherimide composition; said melt mixing being carried out at a temperature in a range between about 300°C and about 450°C to provide a polymer-organoclay composite composition, said polymer-organoclay composite composition being characterized by a percent exfoliation of at least 10 percent. The quaternary organic cation has structure XXXIII. In one embodiment, the polyetherimide composition further comprises at least one polymer selected from the group consisting of polyvinyl chloride, a polyolefin, a polyester, a polyamide, a polysulfone, a polyether sulfone, a polyphenylene sulfide, a polyether ketone, a polyether ether ketone, an ABS, a polystyrene, a polybutadiene, a poly(acrylate), a poly(alkylacrylate), a polyacrylonitrile, a polyacetal, a polycarbonate, a polyphenylene ether, an ethylenevinyl acetate copolymer, a polyvinyl acetate, a liquid crystal polymer, an aromatic polyester, an ethylene-tetrafluoroethylene copolymer, a polyvinyl fluoride, a polyvinylidene fluoride, a polyvinylidene chloride, a polytetrafluoroethylene, and a combination comprising at least one of the foregoing polymers. In one embodiment, the polyetherimide composition comprises a polyether sulfone. In another embodiment, the polyetherimide composition comprises a polyether ketone.

In one embodiment, the present invention provides an article comprising a polymer-organoclay composite composition (a) a quaternary organoclay composition comprising alternating inorganic silicate layers and organic layers, the organic layers comprising a quaternary organic cation ; and (b) a polyetherimide composition, wherein the polymer-organoclay composite composition is characterized by a percent exfoliation of at least 10 percent. Suitable polyetherimide compositions include ULTEM polyetherimide available from GE Plastics.

In one embodiment, the present invention provides a method of making a polymer-organoclay composite composition comprising melt mixing in an extruder, a quaternary organoclay composition comprising alternating inorganic silicate layers and organic layers, said organic layers comprising a quaternary organic cation, with a polyetherimide composition comprising at least one polyetherimide and at least one additional polymer selected from the group consisting of polyamides, polyesters, polyarylene sulfides, polyarylene ethers, polyether sulfones, polyether ketones, polyether ether ketones, polyphenylenes, and polycarbonates; said melt mixing being carried out at a temperature in a range between about 300°C and about 450°C to provide a polymer-organoclay composite composition, said polymer-organoclay composite composition being characterized by a percent exfoliation of at least 10 percent. The quaternary organic cation has structure XXXIII.

IN SITU POLYMERIZATION ROUTE TO POLYMER-ORGANOCLAY COMPOSITE COMPOSITIONS

In one embodiment, the present invention provides methodology for the preparation of polymer-organoclay composite compositions using *in situ* polymerization techniques to create a polymeric resin in the presence of an organoclay composition. The methodology developed presents various advantages, among them intimate contact between the organoclay composition and the nascent polymeric resin.

Thus in one aspect the present invention provides a method of making a polymer-organoclay composite composition, said method comprising (a) contacting under condensation polymerization conditions a first monomer, a second monomer, a solvent, and an organoclay composition, said organoclay composition comprising alternating inorganic silicate layers and organic layers, to provide a first polymerization reaction mixture, wherein one of said first monomer and second monomers is a diamine and the other is a dianhydride; (b) carrying out a stoichiometry verification step on the first polymerization reaction mixture; (c) optionally adding additional reactant to the first polymerization reaction mixture to provide a second polymerization reaction mixture; and (d) removing solvent from the first polymerization reaction mixture or the second polymerization reaction mixture to provide a first polymer-organoclay composite composition comprising a polymer component and an organoclay component wherein the organoclay component is at least 10% exfoliated. In one embodiment, the polymer component is a polyetherimide.

In one embodiment, the polymerization is carried out in the presence of a catalyst, for example sodium phenyl phosphinate (SPP).

In one embodiment, the first monomer is a dianhydride and the second monomer is a diamine. Suitable diamines and dianhydrides include those disclosed herein, for example BPADA and metaphenylene diamine.

Suitable solvents include aromatic solvents such as orthodichorobenzene, toluene, xylene, chlorobenzene, and combinations of the foregoing solvents.

The organoclay composition can be any of the organoclay compositions disclosed herein.

The verification of stoichiometry step may be carried out using any analytical technique suitable for determining accurately the ratio of the first monomer to the second monomer in the first reaction mixture. For example the ratio of the first monomer to the second monomer in the first reaction mixture may be determined by infrared analysis of a film

prepared from an aliquot sample take from the first reaction mixture as described in the experimental section of the present disclosure. Alternatively, the ratio of the first monomer to the second monomer in the first reaction mixture may be determined by art recognized techniques such as high performance liquid chromatography (HPLC), Nuclear Magnetic Resonance (NMR), and end-group titration. The verification of stoichiometry step is important since careful control of the reaction stoichiometry must be exercised in order to achieve one or more target characteristics of the product polymer-organoclay composite composition. In one embodiment, the stoichiometry verification step comprises determining an amine to anhydride ratio.

If after the verification of stoichiometry step a deficiency in one the monomers is detected, additional monomer can be added. Alternatively, the verification of stoichiometry step can signal the need for the addition of another reagent such as a chain stopper. When additional reactant is added to the first polymerization reaction mixture, it is deemed to constitute a second polymerization reaction mixture which may be further reacted by heating, for example.

Following completion of the polymerization reaction, solvent is removed to provide a first polymer-organoclay composite composition comprising a polymer component and an organoclay component wherein the organoclay component is at least 10% exfoliated. Solvent removal may be effected by art recognized techniques such as distillation, filtration, antisolvent precipitation followed by filtration and the like. In one embodiment, removing the solvent from the first polymerization reaction mixture or the second polymerization reaction mixture is carried out using a devolatilizing extruder, a wiped film evaporator, or a combination thereof.

In one embodiment, the first polymer-organoclay composite composition is further subjected to a step of melt mixing at a temperature in a range between about 300˚C and about 450˚C. In certain embodiments such melt mixing further enhances the degree of exfoliation of the organoclay component of the polymer-organoclay composite composition.

In one embodiment, contacting under condensation polymerization conditions comprises heating at a temperature greater than 100˚C. In an alternate embodiment, contacting under condensation polymerization conditions comprises heating at a temperature less than 100˚C. In another embodiment, contacting under condensation polymerization conditions comprises heating in the presence of a solvent and a catalyst at a temperature greater than 100˚C. In an alternate embodiment, contacting under condensation polymerization conditions comprises heating in the presence of a solvent and a catalyst at a temperature less than 100˚C.

In one embodiment, the first monomer is a dianhydride having structure XL

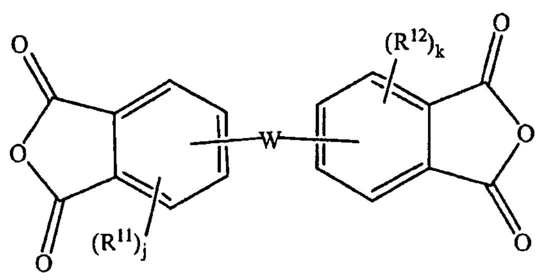

XL

wherein "j" and "k" are independently a number from 0 to 3; $R^{11}$ and $R^{12}$ are independently at each occurrence a halogen atom, a $C_1$-$C_{20}$ aliphatic radical, a $C_5$-$C_{20}$ cycloaliphatic radical, or a $C_2$-$C_{20}$ aromatic radical; and W is a bond, a divalent $C_1$-$C_{20}$ aliphatic radical, a divalent $C_5$-$C_{20}$ cycloaliphatic radical, a divalent $C_2$-$C_{20}$ aromatic radical, an oxygen linking group, a sulfur linking group, a $SO_2$ linking group, or a Se linking group.

In one embodiment, the dianhydride XL is selected from the group consisting of bisphenol A dianhydride (BPADA), 4,4'-oxydiphthalic anhydride (4,4'-ODPA), 3,4'-oxydiphthalic anhydride (3,4'-ODPA), 3,3'-oxydiphthalic anhydride (3,3'-ODPA), 4,4'-biphenyl dianhydride, 3,4'-biphenyl dianhydride, combinations thereof.

In another embodiment, the dianhydride employed is any of the dianhydrides disclosed herein.

In one embodiment, the second monomer is a diamine selected from any of the diamines disclosed herein, for example meta-phenylenediamine. In one embodiment, the second monomer is an aromatic diamine. In one embodiment, the aromatic diamine is selected from the group consisting of metaphenylene diamine, paraphenylene diamine, 4,4'-diaminodiphenyl sulfone, and 4,4'-oxydianiline.

As noted, the organoclay composition, employed comprises alternating inorganic silicate layers and organic layers. The inorganic silicate layers, as taught herein may be derived from inorganic clay materials. In one embodiment, the inorganic silicate layers are derived from an inorganic clay selected from the group consisting of kaolinite, dickite, nacrite, halloysite, antigorite, chrysotile, pyrophyllite, montmorillonite, beidellite, nontronite, saponite, sauconite, stevensite, hectorite, tetrasilylic mica, sodium taeniolite, muscovite, margarite, talc, vermiculite, phlogopite, xanthophyllite, chlorite, and combinations thereof.

In one embodiment, the present invention provides a method of making a polymer-organoclay composite

composition comprising (a) contacting a dianhydride with a diamine in a solvent at a temperature in a range between about 105˚C and about 250˚C in the presence of an organoclay composition, said organoclay composition comprising alternating inorganic silicate layers and organic layers, to provide a first polymerization reaction mixture; (b) determining an amine to anhydride ratio in the first polymerization reaction mixture; (c) optionally adding additional dianhydride or diamine to the first polymerization reaction mixture to provide a second polymerization reaction mixture; and (d) removing solvent from the first polymerization reaction mixture or the second polymerization reaction mixture using a devolatilizing extruder to provide a first polymer-organoclay composite composition comprising a polymer component and an organoclay component wherein the organoclay component is at least 10% exfoliated. In one embodiment, the method further comprises a step of melt mixing the first polymer-organoclay composition at a temperature in a range between about 300˚C and about 450˚C.

In one embodiment, the present invention provides a method of making a polyetherimide-organoclay composite composition comprising (a) contacting bisphenol A dianhydride (BPADA) with a diamine in orthodichlorobenzene at a temperature in a range between about 125˚C and about 250˚C in the presence of an organoclay composition, said organoclay composition comprising alternating inorganic silicate layers and organic layers, to provide a first polymerization reaction mixture; (b) determining an amine to anhydride ratio in the first polymerization reaction mixture; (c) optionally adding additional dianhydride or diamine to the first polymerization reaction mixture to provide a second polymerization reaction mixture; and (d) removing orthodichlorobenzene from the first polymerization reaction mixture or the second polymerization reaction mixture using a devolatilizing extruder to provide a first polymer-organoclay composite composition comprising a polymer component and an organoclay component wherein the organoclay component is at least 10% exfoliated.

In one embodiment, the present invention provides a method of making a polyetherimide-organoclay composite composition comprising (a) contacting 4,4'-oxydiphthalic anhydride (4,4'-ODPA) with a diamine in orthodichlorobenzene at a temperature in a range between about 125˚C and about 250˚C in the presence of an organoclay composition, said organoclay composition comprising alternating inorganic silicate layers and organic layers, to provide a first polymerization reaction mixture; (b) determining an amine to anhydride ratio in the first polymerization reaction mixture; (c) optionally adding additional dianhydride or diamine to the first polymerization reaction mixture to provide a second polymerization reaction mixture; and (d) removing orthodichlorobenzene from the first polymerization reaction mixture or the second polymerization reaction mixture using a devolatilizing extruder to provide a first polymer-organoclay composite composition comprising a polymer component and an organoclay component wherein the organoclay component is at least 10% exfoliated.

EXAMPLES

The following examples are intended only to illustrate methods and embodiments in accordance with the invention, and as such should not be construed as imposing limitations upon the claims.

Bisphenol A dianahydride (BPADA, CAS No. 38103-06-9) (97.7 % purity) was obtained from GE Plastics. 4,4'-Oxydiphthalicanhydride (ODPA, CAS No. 1823-59-2) (99% purity) was from Chriskev Company, Lenexa, Kansas, USA.

2,4,6-triphenyl-pyrylium tetrafluoroborate, aniline, 4-phenoxyaniline, 4-cumylphenol, potassium carbonate, 1-fluoro-4-nitro-benzene, palladium on carbon, and ammonium formate were procured from Aldrich.

The organoclay compositions (organically modified clays) were made with Kunipia F montmorillonite unless indicated otherwise. See for example those organoclay compositions made with Nanocor PGN. Kunipia F montmorillonite was purchased from Kunimine Industries Co. The manufacturer's reported cation exchange capacity (CEC) is 115 meq/100g. Un-dried Kunipia F contains 8 wt% of moisture at room temperature, and a sodium analysis of an un-dried Kunipia F sample gave a sodium content of 23,850 (±500) ppm, which indicated a CEC of 103.7 meq/100g for un-dried sample.

For the purposes of this disclosure a cation exchange capacity value of 100 meq/100g was used for all calculations and material preparations. The aspect ratio for Kunipia F montmorillonite is 320 (average), 80 (minimum), 1120 (maximum). Comparable montmorillonites may be obtained from Nanocor. Products PGV and PGN which have aspect ratios of 150-200 and 300-500 nm respectively. The cation exchange capacities of PGV and PGN clays are 145 (± 10%) and 120 (± 10%) meq/100g respectively.

Sonication of organically modified montmorillonites in solvent was performed using a 450 W model of Branson Sonifier 450 with a 0.5" diameter solid probe. For large scale sonication (>100 g clays), a 1500 W model of Autotune Series High Intensity Ultrsonic Processor from Sonics & Materials inc. was used.

TGA measurements were performed on a Perkin Elmer TGA 7 using Pyris software. A temperature ramp spanning 25 to 900˚C at a rate of 20˚C/minute was used for all ramped samples. Isothermal runs were performed at 400 ˚C to examine thermal stability at the target processing/extrusion temperature. Thermal stabilities are reported as the onset temperature of mass loss and % weight retention at 30 minutes for isothermal runs.

Thermal Mechanical Analysis (TMA) was used to measure the CTE of film samples. Film samples were cut with 2 razor blades spaced to 4mm in a custom jig. The analysis was performed on a TMA Q400 Thermo Mechanical

Analyzer, serial number 0400-0007, available from TA Instruments. Experimental parameters were set at 0.050 N of force, 5.000g static weight, nitrogen purge at 50.0 mL/min, and 0.5 sec/pt sampling interval. CTE calibration was performed with an aluminum standard at a 5˚C/min ramp rate under nitrogen purge from 0 to 200˚C. Temperature calibration was performed with an indium standard at a 5˚C/min ramp rate under nitrogen purge. Following calibration, the CTE calibration was verified to be within 1 ppm/˚C and the temperature calibration was verified to be within 0.5˚C of expected values.

Transmission Electron Microscopy (TEM) measurements were performed on film samples embedded in epoxy an epoxy matrix and then microtomed at room temperature to a thickness of ~100nm using a Reichert Ultracut E microtome. The microtomed sections were collected on copper grids and then imaged using a Philps CM 100 - (100KV) transmission electron microscope.

X-ray Diffraction (XRD) (Low angle XRD) measurements were carried out on a Bruker D8 advance diffractometer using $\theta$ - $\theta$ geometry. Ni-filtered Cu K$\alpha$ radiation was used with a M-Braun PSD-50m position-sensitive-detector and an incident slit of 0.6mm. The scanning range was from 1.4-25 degrees 2 $\theta$.

Sodium content analysis was performed using solution nebulization inductively coupled plasma emission spectrometry (ICP-AES, Varian Liberty II). Combustion analyses (C-H analysis) on organoclay compositions (modified clays) were performed at LECO Corporation (Web:www.leco.com). Small-scale melt-mixing experiments of polymer and modified clays were performed on a Haake Rheomix 600 instrument.

Percent Exfoliation is defined as follows. Inorganic fillers have a volumetric effect on the Coefficient of Thermal Expansion (CTE). For each volume % of filler incorporated into a polymer matrix, there is a corresponding % reduction in CTE. Therefore, when an organoclay composition is added to a polymeric resin, any decrease in CTE above the volumetric effect is directly related to the exfoliation of the organoclay composition in the polymer matrix. A percent exfoliation can be calculated as the ratio of the normalized CTE (CTE due to volumetric filling) to the experimentally measured CTE. To calculate the normalized CTE, the weight percent silicate added was converted to a volume % using the density of the silicate (2.86g/cc according to the suppliers technical datasheet) and the density of standard polyetherimide (1.27 g/cc according to the suppliers technical datasheet). Therefore, each wt% silicate can be translated into a volume % by multiplication by 0.00444. Thus,

$$\text{Normalized CTE} = \text{CTE unfilled} - (0.00444 * \text{CTE unfilled} * \text{wt\% silicate}),$$

and the percent exfoliation is given by

$$\text{\% Exfoliation} = \text{CTE filled (experimental measurement)} / \text{Normalized CTE}.$$

PREPARATION OF PHENONE-CONTAINING QUATERNARY PHOSPHONIUM SALTS

Example 73 Preparation of 4-Iodo-phenoxy-benzophenone

A 1000 mL 3-necked round-bottomed flask fitted with a Dean-Stark trap, condenser, stir-bar and nitrogen gas adaptor was charged with 4-iodophenol (19.0 g, 0.086 mol), 4-fluorobenzophenone (15.72 g, 0.079 mol), potassium carbonate (7.16 g, 0.0518 mol), DMF (157 mL) and toluene (16 mL). The resulting mixture was stirred and refluxed for 2 hours (solution temperature ~160 ˚C) under nitrogen atmosphere. Water was collected at the trap during this period of time. After 2 hours, the reaction was cooled to room temperature, and water (400 mL) was added to the reaction mixture and the desired product precipitated out of solution as a cream white solid. The product was further purified by re-crystallization isopropanol (400 mL) to give the desired product as a white crystalline solid (25 g, 87 % yield).

Example 74 Synthesis of 4-(4-Benzoyl-phenoxy)-phenyl Triphenyl Phosphonium Iodide, **32**

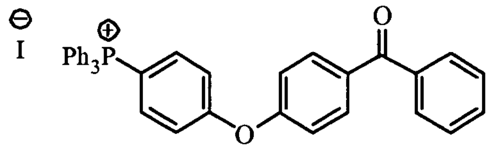

32

To a 250 mL 3-necked round-bottomed flask fitted with a condenser and nitrogen gas inlet were added 4-iodophenoxy-benzophenone (25.00 g, 0.0624 mol), triphenylphospine (16.38 g, 0.0624 mol), palladium acetate (0.14 g, 0.624 mmol) and degassed xylene (125 mL). Argon was bubbled through the solution for 1 hour to eliminate oxygen. The mixture was refluxed for 2 hours whereupon a dark-orange solution was formed. The reaction mixture was cooled to room temperature, and the phosphonium salt phase-separated from xylene as a dark orange solid. Reaction progress was monitored using TLC with a 90/10 methylene chloride/methanol developing solution. The product was further purified by flash chromatography using silica gel 60 (500g) and methylene chloride with 5% methanol as solvent. A red impurity was eluted first followed by the desired phosphonium salt **32** (40 g, 82 % yield) which was isolated as a cream colored powder after removal of solvent.

Preparation of Bis-4-(triphenylphosphonium) Benzophenone dichloride

A 20mL capped test tube was fitted with a nitrogen purge and the reagents dichlorobenzophenone 1.0g (0.00398 mol) and triphenylphosphine 2.1g (0.00769 mol) were added. The reaction was heated to 270C using an aluminum hot block for 2h. Following cooling to room temperature the solid was dissolved in chloroform and added dropwise to hexanes. The resulting water soluble purple solid was redissolved in chloroform and and reisolated by first adding the chloroform solution to 20mL of ethylether and collection by vacuum filtration. Analysis by GC-MS showed two peaks, one corresponding to the monophosphonium product and a second to the diphosphonium product. Final isolated yield was 1.1g.

PREPARATION OF POLYMER-ORGANOCLAY COMPOSITE COMPOSITIONS COMPRISING PHENONE-CONTAINING QUATERNARY PHOSPHONIUM CATIONS

Example 75 Synthesis of PhEK-MMT, the Organoclay Composition Derived From 4-(4-Benzoyl-phenoxy)-phenyl-triphenylphosphonium iodide and Sodium Montmorillonite

A 5 L round-bottom flask equipped with a mechanical stirrer was charged with sodium montmorillonite (30 g, 0.03 mole) and deionized water (2.5 L). The solution was stirred and heated at 85 ˚C until the sodium montmorillonite was well dispersed. A solution of phosphonium salt **32** (22.8 g, 0.034 mole) in acetonitrile (600 mL) was warmed to about 60˚C and was then added to the suspension of sodium montmorillonite over 10 min. After the addition of the salt solution, the reaction mixture was stirred at 85 ˚C for about 3 hours.

The organoclay composition (also at times referred to as a modified montmorillonite, or simply "the modified clay") was collected by filtration, and washed with hot water (2 L, 80 ˚C) to remove inorganic salt impurities and the sodium iodide by-product of the exchange reaction. The modified clay was further purified by re-dispersing in acetonitrile (2 L) at 60 ˚C, followed by filtration to remove any excess phosphonium salt. The purified clay was dried under vacuum for 24 hours at 150 ˚C and was milled to give PhEK-MMT as a fine powder (40 g, 72% yield)

Synthesis of Bis-4-(triphenylphosphonium) Benzophenone-MMT

A 500M1 Beaker was charged with 200mL of water and 0.7183 g of bis-4-(triphenylphosphonium) benzophenone dichloride. The mixture was heated to reflux for 2h. After cooling to room temperature the organocaly was isolated by centrifugation, washed with two 200mL portions of deionized water and recollected by centrifugation.

PREPARATION OF POLYMER-ORGANOCLAY COMPOSITE COMPOSITIONS COMPRISING PHENONE-CONTAINING QUATERNARY PHOSPHONIUM CATIONS

Examples 76-78 Polymer-Organoclay Composite Composition Comprising PEEK 450G

PEEK 450G resin was cryogenically ground with a 3 mm mesh. The resulting material had a mix of fine powder and larger granules. The ground material was passed through a 1 mm screen and the fine powder granules were collected. The grinding was necessary to feed the material through the small diameter 16 mm extruder, and to insure

good mixing of the ground clay.

The ground resin was blended with powdered PhEK-MMT (See Example 75 for preparation) in an amount corresponding to an inorganic silicate loading of 5%. To compare the effect of the chemical structure of the organic cation on the properties of the polymer-organoclay composite composition two other organically modified clays were prepared as well (Examples 77 and 78). Thus blends of the ground PEEK 450G resin were also prepared with the organoclay compositions Cumyl-MMT (Example 77) and TPP-MMT (Example 78). The preparation of Cumyl-MMT, an organoclay composition comprising organophosphonium cation **15** is given in Example 15 of WO2008/002866 . TPP-MMT is an organoclay composition comprising silicate layers derived from sodium montmorillonite clay and a tetraphenyl phosphonium halide and can be prepared by methods disclosed herein. The amounts of organoclay composition and polymeric resin used in Examples 76-78 are given in Table 13. The formulations were mixed by placing both components in a plastic bag and shaking for several minutes.

Table 13

| Example | Control | 76 | 77 | 78 |
|---|---|---|---|---|
| Polymeric resin | PEEK 450G | PEEK 450G | PEEK 450G | PEEK 450G |
| Silicate Loading | 0% | 5% | 5% | 5% |
| Organoclay composition | None | PhEK-MMT | Cumyl-MMT* | TPP-MMT** |
| Weight % Silicate in Clay | "0% | 65% | 58% | 75% |
| Weight Organoclay composition † | 0 grams | 16.92 grams | 18.97 grams | 14.67 grams |
| Weight PEEK 450G | 220.00 grams | 203.08 grams | 201.3 grams | 205.33 grams |
| Total Weight of Formulation | 220.00 grams | 220.00 grams | 220.00 grams | 220.00 grams |
| * The preparation of the Organoclay composition Cumyl-MMT is given in Example 15, of WO 2008/002866 ** TPP-MMT is an organoclay composition derived from sodium montmorillonite clay and a tetraphenyl phosphonium halide salt | | | | |

After shaking, the mixture of the organoclay composition and the polymeric resin was extruded at 0.5 pounds per hour on a 16 mm twin screw extruder (L/D = 25) with a co-rotating and intermeshing screw, and the extrudate was pelletized. The pellets collected for each material at the low throughput (0.5 lb/hr) were compression molded to thin disks using a hot press. The disks were submitted for TEM analysis to determine the extent of dispersion. Results are gathered in Table 14.

Table 14: TEM Analysis Results

| Example | Organoclay composition | Polymeric Resin | TEM Rating |
|---|---|---|---|
| 76 | PhEK-MMT | PEEK 450G | Good Dispersion |
| 77 | Cumyl-MMT | PEEK 450G | Poor Dispersion |
| 78 | TPP-MMT | PEEK 450G | Poor Dispersion |

Transmission electron microscopy (TEM) analysis of the extruded polymer-organoclay composite composition comprising the PhEK-MMT modified clay in PEEK (Example 76) indicated good dispersion of the organoclay composition into the polymer matrix. The dispersion obtained was superior to that observed in Examples 77 and 78. No large tactoids of clay were visible and most of the clay appears to be in the form of small stacks of silicate layers indicating a high degree of exfoliation of the organoclay composition into the polymer matrix. It is believed that the enhanced dispersion observed for the polymer-organoclay composite composition of Example 76 is due to the structural similarities between the polymeric resin used, PEEK 450G, and the organoclay composition used, PhEK-MMT. The PEEK 450G resin and the organoclay composition PhEK-MMT comprise 4-aryloxy substituted benzophenone moieties. Neither of the organoclay compositions employed in Examples 77 and 78 comprise a 4-aryloxy substituted benzophenone moiety.

Transmission electron microscopy (TEM) analysis of the extruded polymer-organoclay composite composition of Example 78 (cumyl-MMT modified clay in PEEK) indicated relatively poor dispersion. Large tactoids of the organoclay composition were visible in the transmission electron micrographs taken, which indicated that at least a portion of the organoclay composition did not exfoliate completely into the PEEK polymer matrix.

TEM results for the TPP-MMT modified clay in PEEK (Example 78) likewise indicated relatively poor dispersion

of the organoclay composition in the polymeric resin. Large tactoids of clay were visible in the transmission electron micrographs taken, which indicated that at least a portion of the organoclay composition did not exfoliate completely into the PEEK polymer matrix.

PREPARATION OF POLYMER-ORGANOCLAY COMPOSITE COMPOSITIONS USING MELT MIXING TECHNIQUES IN COMPOSITONS SUBSTANTIALLY FREE OF POLYETHERIMIDES

Examples 79-81

The following Examples illustrate the use of methodology provided by the present invention for the preparation of polymer-organoclay composite composition which are substantially free of polyetherimides and which the degree of exfoliation of the constituent organoclay composition is at least 10 percent. Thus, 70 grams of a polymeric resin (See Table 15 below) was combined with 4.98 grams of the organoclay composition BAPP-TPPy-MMT. The powders were blended by shaking in a closed container for 2 minutes. The resulting mixture was heated in a HAAKE mixing bowl at 50 rpm. The mixture was held at temperature according to Table 15. The molten mixture in the HAAKE mixing bowl was sampled every five minutes. The 15 minute sample was pressed into a film between two sheets of Teflon lined foil at 760˚F. The pressed film sample was then submitted for analysis by Thermal Mechanical Analysis and the CTE measured over the range 30 to 200C. The pressed film had a CTE values listed in Table 15.

Table 15: Polymer-Organoclay Composite Compositions Prepared By Melt Mixing

| Example | Polymeric Resin | Organoclay Composition | Mixing Temperature | CTE of Film (30-230˚C) |
|---|---|---|---|---|
| 79 | 150P | BAPP-TPPy-MMT | 380˚C | 67ppm/˚C |
| 80 | PPSU* | BAPP-TPPy-MMT | 340˚C | 61 ppm/˚C |
| 81 | PES** (ULTRASON E2010) | BAPP-TPPy-MMT | 330˚C | 54 ppm/˚C |
| * PPSU = RADEL R, ** PES = POLYETHERSULFONE | | | | |

The data in Table 15 demonstrate that polymer-organoclay composite compositions which are substantially free of polyetherimides may be prepared according to the method of the present invention by melt mixing a quaternary organoclay composition with a polymeric resin at a temperature in a range between about 300˚C and about 450˚C. The data suggest that in order to attain high levels of exfoliation (>10% exfoliation) the polymeric resin and the organoclay composition should be melt mixed at greater shear than is typically provided in a low shear mixer such as a Haake mixer. It is believed that the compositions of 79-81 would have attained a % exfoliation of greater than 10% had the melt mixing been carried out in a higher shear environment such as a twin screw extruder operated at a temperature in a range between about 300˚C and about 450˚C.

## Claims

1. An organoclay composition comprising alternating inorganic silicate layers and organic layers, said organic layers comprising a quaternary phosphonium cation having structure XXXIII

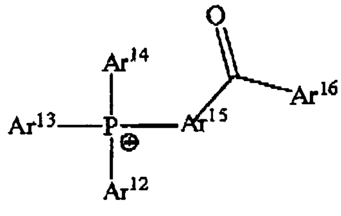

XXXIII

wherein $Ar^{12}$, $Ar^{13}$, $Ar^{14}$ and $Ar^{15}$ are independently $C_2$-$C_{50}$ aromatic radicals; and $Ar^{16}$ is a $C_2$-$C_{200}$ aromatic radical, or a polymer chain comprising at least one aromatic group.

2. The organoclay composition according to claim 1, wherein $Ar^{16}$ is a phenyl group.

**3.** The organoclay composition according to claim 1, wherein $Ar^{16}$ is a polyetherimide polymer chain.

**4.** The organoclay composition according to claim 1, wherein $Ar^{16}$ is a polyether ketone polymer chain.

**5.** The organoclay composition according to claim 1, wherein said quaternary phosphonium cation has structure XXXIV.

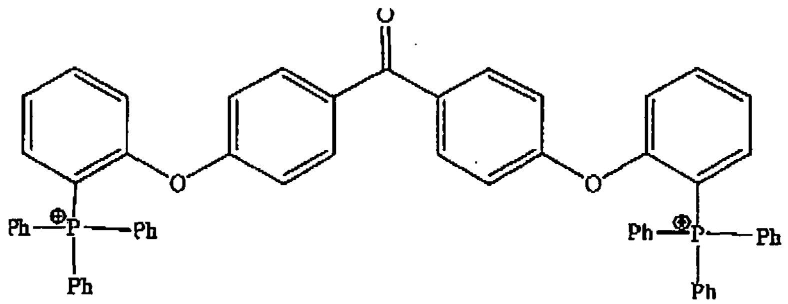

XXXIV

**6.** The organoclay composition according to claim 1, wherein said quaternary phosphonium cation has structure XXXV

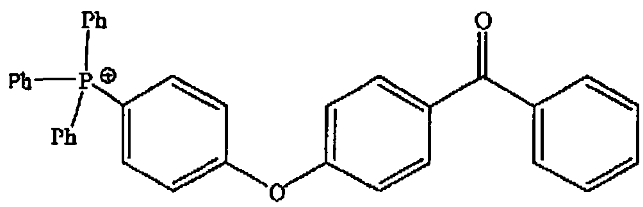

XXXV.

**7.** The organoclay composition according to claim 1, wherein the inorganic silicate layers are derived from an inorganic clay selected from the group consisting of kaolinite, dickite, nacrite, halloysite, antigorite, chrysotile, pyrophyllite, montmorillonite, beidellite, nontronite, saponite, sauconite, stevensite, hectorite, tetrasilylic mica, sodium taeniolite, muscovite, margarite, talc, vermiculite, phlogopite, xanthophyllite, chlorite, and combinations thereof.

**8.** The organoclay composition according to claim 1, wherein the inorganic silicate layers are derived from montmorillonite.

**9.** A method for the preparation of an organoclay composition comprising alternating inorganic silicate layers and organic layers, said organic layers comprising a quaternary phosphonium cation having structure XXXIII

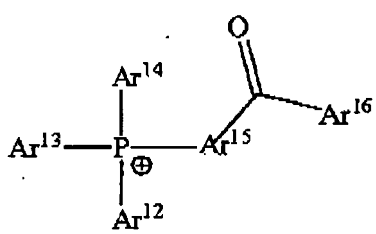

XXXIII

wherein $Ar^{12}$, $Ar^{13}$, $Ar^{14}$ and $Ar^{15}$ are independently $C_2$-$C_{50}$ aromatic radicals; and $Ar^{16}$ is a $C_2$-$C_{200}$ aromatic radical, or a polymer chain comprising at least one aromatic group, said method comprising:

(a) contacting in a first reaction mixture an organophosphonium salt having structure XXXVI

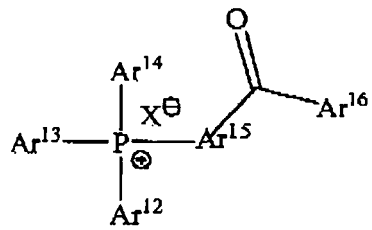

XXXVI

wherein $Ar^{12}$, $Ar^{13}$, $Ar^{14}$ and $Ar^{15}$ are independently $C_2$-$C_{50}$ aromatic radicals; and $Ar^{16}$ is a $C_2$-$C_{200}$ aromatic radical, or a polymer chain comprising at least one aromatic group; and X is a charge balancing counterion; with a layered silicate in the presence of a solvent; and

(b) isolating the product organoclay composition.

**10.** The method according to claim 9, wherein said contacting is carried out in a solvent comprising at least one organic solvent.

**11.** The method according to claim 9, wherein said contacting is carried out in a solvent comprising water.

**12.** The method according to claim 9, wherein said layered silicate comprises an inorganic clay selected from the group consisting of kaolinite, dickite, nacrite, halloysite, antigorite, chrysotile, pyrophyllite, montmorillonite, beidellite, nontronite, saponite, sauconite, stevensite, hectorite, tetrasilylic mica, sodium taeniolite, muscovite, margarite, talc, vermiculite, phlogopite, xanthophyllite, chlorite, and combinations thereof.

**13.** The method according to claim 9, wherein said layered silicate comprises montmorillonite clay.

**14.** An organoclay composition comprising alternating inorganic silicate layers and organic layers, said organic layers comprising a polymeric quaternary phosphonium cation, said polymeric organophosphonium cation having structure XXXVII

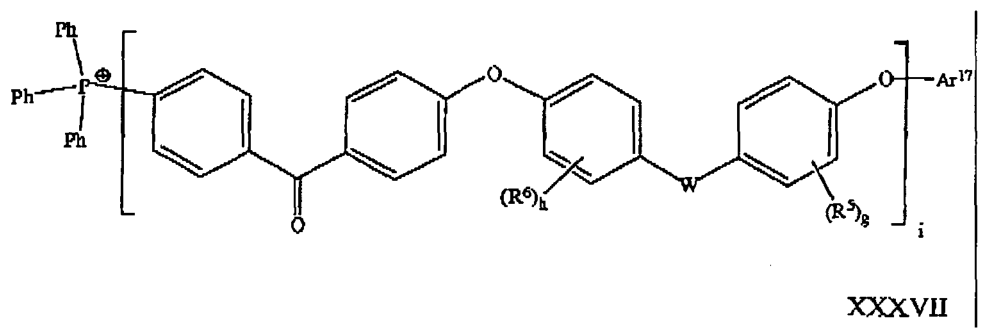

XXXVII

wherein "g" and "h" are independently a number from 0 to 4; W is a bond, a divalent $C_1$-$C_{20}$ aliphatic radical, a divalent $C_2$-$C_{20}$ cycloaliphatic radical, a divalent $C_2$-$C_{20}$ aromatic radical, an oxygen linking group, a sulfur linking group, a $SO_2$ linking group, or a Se linking group; $R^5$ and $R^6$ are independently at each occurrence a halogen atom, a $C_1$-$C_{20}$ aliphatic radical, a $C_2$-$C_{20}$ cycloaliphatic radical, or a $C_2$-$C_{20}$ aromatic radical; "i" is a number from 10 to 1000; and $Ar^{17}$ is a $C_{10}$-$C_{200}$ aromatic radical, or a polymer chain comprising at least one aromatic group.

**15.** The organoclay composition according to claim 14, wherein $Ar^{17}$ is an aromatic radical having structure XXXVIII

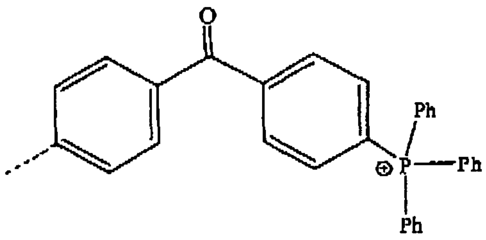

XXXVIII

## Patentansprüche

1. Organotonzusammensetzung, die alternierende anorganische Silicatschichten und organische Schichten umfasst, wobei die organischen Schichten ein quartäres Phosphoniumkation mit der Struktur XXXIII umfassen:

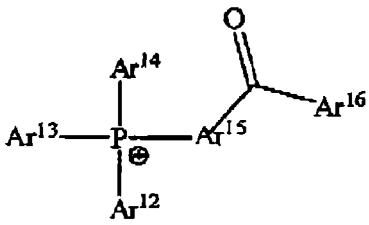

XXXIII,

wobei $Ar^{12}$, $Ar^{13}$, $Ar^{14}$ und $Ar^{15}$ unabhängig aromatische $C_2$-$C_{50}$-Reste sind und $Ar^{16}$ ein aromatischer $C_2$-$C_{200}$-Rest oder eine Polymerkette, die mindestens eine aromatische Gruppe umfasst, ist.

2. Organotonzusammensetzung nach Anspruch 1, wobei $Ar^{16}$ eine Phenylgruppe ist.

3. Organotonzusammensetzung nach Anspruch 1, wobei $Ar^{16}$ eine Polyetherimid-Polymerkette ist.

4. Organotonzusammensetzung nach Anspruch 1, wobei $Ar^{16}$ eine Polyetherketon-Polymerkette ist.

5. Organotonzusammensetzung nach Anspruch 1, wobei das quartäre Phosphoniumkation die Struktur XXXIV aufweist:

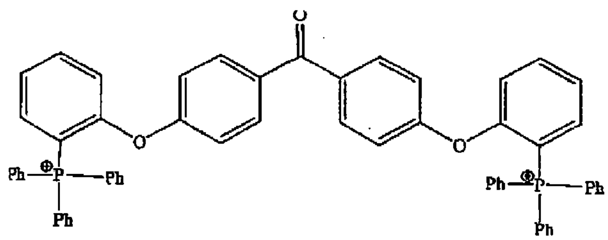

XXXIV.

6. Organotonzusammensetzung nach Anspruch 1, wobei das quartäre Phosphoniumkation die Struktur XXXV aufweist:

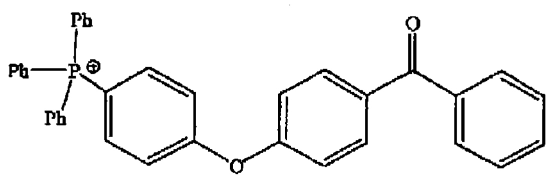

XXXV.

7. Organotonzusammensetzung nach Anspruch 1, wobei die anorganischen Silicatschichten von einem anorganischen Ton abgeleitet sind, der aus der Gruppe bestehend aus Kaolinit, Dickit, Nakrit, Halloysit, Antigorit, Chrysotil, Pyrophyllit, Montmorillonit, Beidellit, Nontronit, Saponit, Sauconit, Stevensit, Hectorit, Tetrasilyl-Glimmer, Natrium-Taeniolith, Muskovit, Margarit, Talk, Vermiculit, Phlogopit, Xanthophyllit, Chlorit und Kombinationen davon ausgewählt ist.

8. Organotonzusammensetzung nach Anspruch 1, wobei die anorganischen Silicatschichten von Montmorillonit abgeleitet sind.

9. Verfahren zur Herstellung einer Organotonzusammensetzung, die alternierende anorganische Silicatschichten und organische Schichten umfasst, wobei die organischen Schichten ein quartäres Phosphoniumkation mit der Struktur XXXIII umfassen:

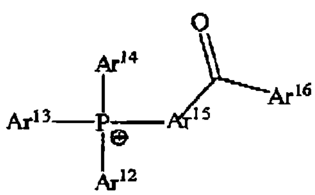

XXXIII,

wobei $Ar^{12}$, $Ar^{13}$, $Ar^{14}$ und $Ar^{15}$ unabhängig aromatische $C_2$-$C_{5O}$-Reste sind und $Ar^{16}$ ein aromatischer $C_2$-$C_{200}$-Rest oder eine Polymerkette, die mindestens eine aromatische Gruppe umfasst, ist, wobei das Verfahren Folgendes umfasst:

(a) Inkontaktbringen eines Organophosphoniumsalzes mit der Struktur XXXVI:

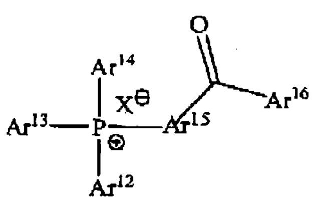

XXXVI,

wobei $Ar^{12}$, $Ar^{13}$, $Ar^{14}$ und $Ar^{15}$ unabhängig aromatische $C_2$-$C_{50}$-Reste sind und $Ar^{16}$ ein aromatischer $C_2$-$C_{200}$-Rest oder eine Polymerkette, die mindestens eine aromatische Gruppe umfasst, ist und X ein ladungsausgleichendes Gegenion ist; in einem ersten Reaktionsgemisch mit einem Phyllosilicat in Gegenwart eines Lösungsmittels und

(b) Isolieren der Organotonzusammensetzung als Produkt.

10. Verfahren nach Anspruch 9, wobei das Inkontaktbringen in einem Lösungsmittel durchgeführt wird, das mindestens ein organisches Lösungsmittel umfasst.

11. Verfahren nach Anspruch 9, wobei das Inkontaktbringen in einem Lösungsmittel durchgeführt wird, das Wasser umfasst.

12. Verfahren nach Anspruch 9, wobei die Silicatschichten einen anorganischen Ton umfassen, der aus der Gruppe bestehend aus Kaolinit, Dickit, Nakrit, Halloysit, Antigorit, Chrysotil, Pyrophyllit, Montmorillonit, Beidellit, Nontronit,

Saponit, Sauconit, Stevensit, Hectorit, Tetrasilyl-Glimmer, Natrium-Taeninolith, Muskovit, Margarit, Talk, Vermiculit, Phlogopit, Xanthophyllit, Chlorit und Kombinationen davon ausgewählt ist.

**13.** Verfahren nach Anspruch 9, wobei die Silicatschichten Montmorillonit-Ton umfassen.

**14.** Organotonzusammensetzung, die alternierende anorganische Silicatschichten und organische Schichten umfasst, wobei die organischen Schichten ein polymeres quartäres Phosphoniumkation umfassen, wobei das polymere Organophosphoniumkation die Struktur XXXVII aufweist:

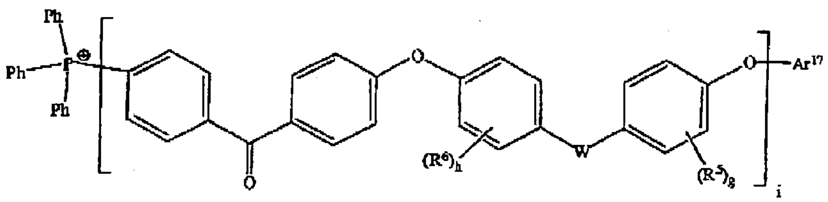

XXXVII ,

wobei "g" und "h" unabhängig eine Zahl von 0 bis 4 sind; W eine Bindung, ein zweiwertiger aliphatischer $C_1$-$C_{20}$-Rest, ein zweiwertiger cycloaliphatischer $C_2$-$C_{20}$-Rest, ein zweiwertiger aromatischer $C_2$-$C_{20}$-Rest, eine Sauerstoff-Verbindungsgruppe, eine Schwefel-Verbindungsgruppe, eine $SO_2$-Verbindungsgruppe oder eine Se-Verbindungsgruppe ist; $R^5$ und $R^6$ unabhängig bei jedem Vorkommen ein Halogenatom, ein aliphatischer $C_1$-$C_{20}$-Rest, ein cycloaliphatischer $C_2$-$C_{20}$-Rest oder ein aromatischer $C_2$-$C_{20}$-Rest sind; "i" eine Zahl von 10 bis 1000 ist und $Ar^{17}$ ein aromatischer $C_{10}$-$C_{200}$-Rest oder eine Polymerkette, die mindestens eine aromatische Gruppe umfasst, ist.

**15.** Organotonzusammensetzung nach Anspruch 14, wobei $Ar^{17}$ ein aromatischer Rest mit der Struktur XXXVIII ist:

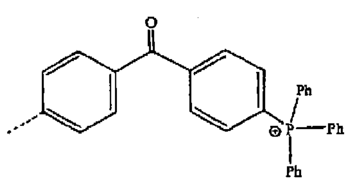

XXXVIII.

## Revendications

**1.** Composition d'argile organique comprenant des couches de silicate inorganique et des couches organiques alternées, lesdites couches organiques comprenant un cation phosphonium quaternaire ayant la structure XXXIII

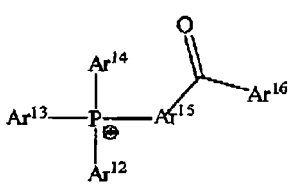

XXXIII

dans laquelle $AR^{12}$, $AR^{13}$, $AR^{14}$ et $AR^{15}$ sont indépendamment des radicaux aromatiques en $C_2$-$C_{50}$ ; et $AR^{16}$ est un radical aromatique en $C_2$-$C_{200}$, ou une chaîne polymère comprenant au moins un groupe aromatique.

**2.** Composition d'argile organique selon la revendication 1, dans laquelle $AR^{16}$ est un groupe phényle.

**3.** Composition d'argile organique selon la revendication 1, dans laquelle $AR^{16}$ est une chaîne polymère polyétherimide.

**4.** Composition d'argile organique selon la revendication 1, dans laquelle $AR^{16}$ est une chaîne polymère de polyéther cétone.

**5.** Composition d'argile organique selon la revendication 1, dans laquelle ledit cation phosphonium quaternaire a la structure XXXIV.

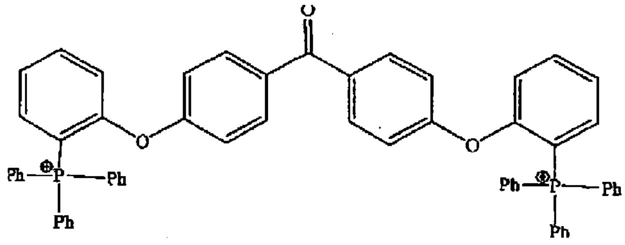

XXXIV

**6.** Composition d'argile organique selon la revendication 1, dans laquelle ledit cation phosphonium quaternaire a la structure XXXV

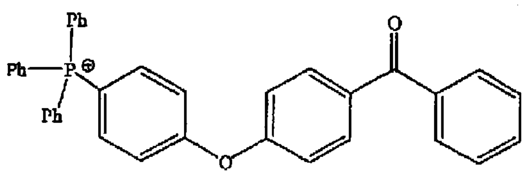

XXXV.

**7.** Composition d'argile organique selon la revendication 1, dans laquelle les couches de silicate inorganique sont dérivées d'une argile inorganique choisie dans le groupe constitué par la kaolinite, la dickite, la nacrite, l'halloysite, l'antigorite, la chrysotile, la pyrophyllite, la montmorillonite, la beidellite, la nontronite, la saponite, la sauconite, la stevensite, l'hectorite, le mica tétrasilylique, la tainiolite sodique, la muscovite, la margarite, le talc, la vermiculite, la phlogopite, la xanthophyllite, la chlorite, et les combinaisons de ceux-ci.

**8.** Composition d'argile organique selon la revendication 1, dans laquelle les couches de silicate inorganique sont dérivées de la montmorillonite.

**9.** Procédé pour la préparation d'une composition d'argile organique comprenant des couches de silicate inorganique et des couches organiques alternées, lesdites couches organiques comprenant un cation phosphonium quaternaire ayant la structure XXXIII

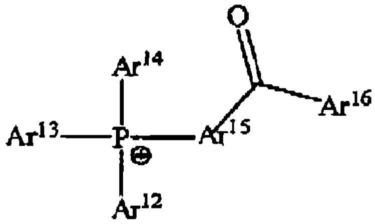

XXXIII

dans laquelle $AR^{12}$, $AR^{13}$, $AR^{14}$ et $AR^{15}$ sont indépendamment des radicaux aromatiques en $C_2$-$C_{50}$ ; et $AR^{16}$ est un radical aromatique en $C_2$-$C_{200}$, ou une chaîne polymère comprenant au moins un groupe aromatique, ledit procédé comprenant :

(a) la mise en contact dans un premier mélange réactionnel d'un sel d'organophosphonium ayant la structure XXXVI

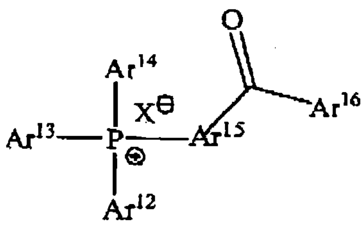

XXXVI

dans laquelle $AR^{12}$, $AR^{13}$, $AR^{14}$ et $AR^{15}$ sont indépendamment des radicaux aromatiques en $C_2$-$C_{50}$ ; et $AR^{16}$ est un radical aromatique en $C_2$-$C_{200}$, ou une chaîne polymère comprenant au moins un groupe aromatique ; et X est un contre-ion équilibrant la charge ; avec un silicate stratifié en présence d'un solvant ; et
(b) l'isolement de la composition d'argile organique produite.

**10.** Procédé selon la revendication 9, dans lequel ladite mise en contact est effectuée dans un solvant comprenant au moins un solvant organique.

**11.** Procédé selon la revendication 9, dans lequel ladite mise en contact est effectuée dans un solvant comprenant de l'eau.

**12.** Procédé selon la revendication 9, dans lequel ledit silicate stratifié comprend une argile inorganique choisie dans le groupe constitué par la kaolinite, la dickite, la nacrite, l'halloysite, l'antigorite, la chrysotile, la pyrophyllite, la montmorillonite, la beidellite, la nontronite, la saponite, la sauconite, la stevensite, l'hectorite, le mica tétrasilylique, la tainiolite sodique, la muscovite, la margarite, le talc, la vermiculite, la phlogopite, la xanthophyllite, la chlorite, et les combinaisons de ceux-ci.

**13.** Procédé selon la revendication 9, dans lequel ledit silicate stratifié comprend de l'argile montmorillonite.

**14.** Composition d'argile organique comprenant des couches de silicate inorganique et des couches organiques alternées, lesdites couches organiques comprenant un cation phosphonium quaternaire polymérique, ledit cation organophosphonium polymérique ayant la structure XXXVII

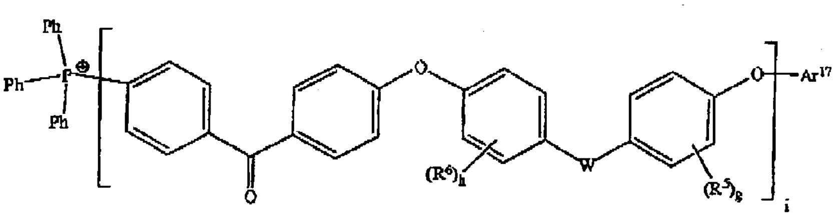

XXXVII

dans laquelle « g » et « h » sont indépendamment un nombre de 0 à 4 ; W est une liaison, un radical aliphatique en $C_1$-$C_{20}$ divalent, un radical cycloaliphatique en $C_2$-$C_{20}$ divalent, un radical, un radical aromatique en $C_2$-$C_{20}$ divalent, un groupe de liaison à l'oxygène, un groupe de liaison au soufre, un groupe de liaison à $SO_2$, ou un groupe de liaison à Se ; $R^5$ et $R^6$ sont indépendamment à chaque occurrence, un atome d'halogène, un radical aliphatique en $C_1$-$C_{20}$, un radical cycloaliphatique en $C_2$-$C_{20}$, ou un radical aromatique en $C_2$-$C_{20}$ ; « i » est un nombre de 10 à 1 000 ; et $AR^{17}$ est un radical aromatique en $C_{10}$-$C_{200}$, ou une chaîne polymère comprenant au moins un groupe aromatique.

**15.** Composition d'argile organique selon la revendication 14, dans laquelle $AR^{17}$ est un radical aromatique ayant la structure XXXVIII

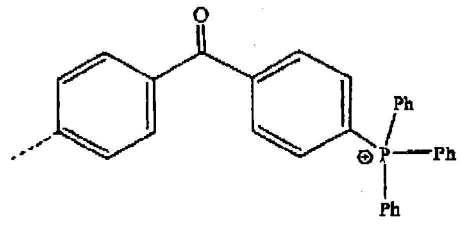

XXXVIII.

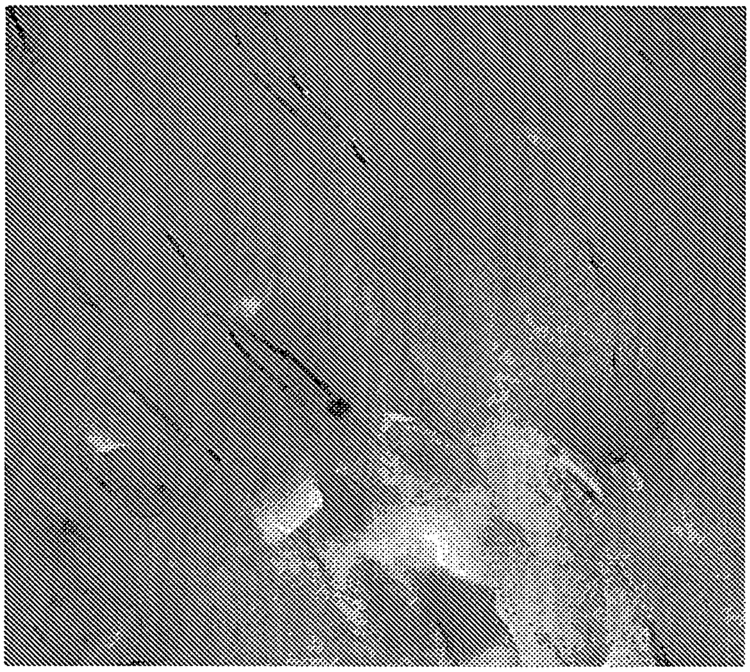

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008002866 A